# EUROPÄISCHE PATENTSCHRIFT

(11) **EP 2 021 100 B1**
(45) Veröffentlichungstag und Bekanntmachung des Hinweises auf die Patenterteilung: **22.06.2016**
(21) Anmeldenummer: 07725274.0
(22) Anmeldetag: 16.05.2007
(51) Int. Cl.: B01D 53/90, B01D 53/94, C01C 1/08, F01N 3/20

(54) **VERFAHREN ZUM BEREITSTELLEN EINES GASFÖRMIGEN STOFFGEMISCHES**
METHOD FOR PROVIDING A GASEOUS MIXTURE
PROCÉDÉ POUR PRÉPARER UN MÉLANGE GAZEUX

(30) Priorität: 16.05.2006 DE 102006023147
(43) Veröffentlichungstag der Anmeldung: 11.02.2009
(73) Patentinhaber: Continental Automotive GmbH, 30165 Hannover (DE)
(72) Erfinder: BRÜCK, Rolf, 51429 Bergisch Gladbach (DE); BRUGGER, Marc, 53819 Neunkirchen (DE); HÄRIG, Thomas, 43819 Neunkirchen-Seelscheid (DE); HIRTH, Peter, 51503 Rösrath (DE); KLEIN, Ulf, 53819 Neunkirchen-Seelscheid (DE)
(86) Internationale Anmeldenummer: PCT/EP2007/004358
(87) Internationale Veröffentlichungsnummer: WO 2007/131784

(56) Entgegenhaltungen:
- EP-A- 1 092 466
- EP-A- 1 748 162
- WO-A-2006/108566
- DE-A1- 4 038 054
- DE-A1- 10 206 028
- DE-A1- 19 922 959
- DE-A1-102004 042 225

## Beschreibung

Gegenstand der vorliegenden Erfindung ist ein Verfahren zum Bereitstellen eines gasförmigen Stoffgemisches umfassend mindestens einen der folgenden Stoffe:
a) mindestens ein Reduktionsmittel und
b) mindestens einen Reduktionsmittelvorläufer.

In besonders vorteilhafter Weise lässt sich die vorliegende Erfindung zur Bereitstellung von Reduktionsmitteln bei der selektiven katalytischen Reduktion von Stickoxiden im Abgassystem von Verbrennungskraftmaschinen einsetzen.

Das Abgas von Verbrennungskraftmaschinen weist Stoffe auf, deren Emission in die Umwelt unerwünscht ist. Beispielsweise dürfen in vielen Ländern Stickoxide (NOₓ) nur bis zu einem gewissen Grenzwert im Abgas von Verbrennungskraftmaschinen enthalten sein. Neben innermotorischen Maßnahmen, mit denen durch Wahl eines möglichst geeigneten Betriebspunktes der Verbrennungskraftmaschine die Emission von Stickoxiden vermindert werden kann, haben sich Nachbehandlungsmethoden etabliert, mit denen eine weitere Absenkung der Stickoxidemissionen möglich ist.

Eine Möglichkeit, die Stickoxidemissionen weiter zu reduzieren, ist die sogenannte selektive katalytische Reduktion (SCR, selective catalytic reduction). Hierbei erfolgt eine selektive Reduktion der Stickoxide zu molekularem Stickstoff (N₂) unter Einsatz eines selektiv wirkenden Reduktionsmittels. Ein mögliches Reduktionsmittel ist Ammoniak (NH₃). Ammoniak wird dabei oft nicht in Form von Ammoniak gelagert, vielmehr wird ein Ammoniakvorläufer bevorratet, der im Bedarfsfall in Ammoniak umgesetzt wird. Mögliche Ammoniakvorläufer sind beispielsweise Harnstoff ((NH₂)₂CO), Ammoniumcarbamat, Isoceransäure (HCNO), Cyanursäure und ähnliches.

Insbesondere Harnstoff hat sich als einfach zu bevorraten erwiesen. Bevorzugt wird Harnstoff in Form einer Harnstoff-Wasserlösung bevorratet. Harnstoff und insbesondere Harnstoff-Wasserlösung ist gesundheitlich unbedenklich, einfach zu distributieren und zu lagern. Unter dem Namen "AdBlue" wird eine solche Harnstoff-Wasserlösung vertrieben.

Aus der DE 40 38 054 A1 ist ein Verfahren und eine Vorrichtung zur Verdampfunk von Harnstoff mittels eines Heizers bekannt. Dieser kann im Abgasstrom oder außerhalb der Abgasleitung ungeordnet sein.

Aus der DE 199 22 959 A1 ist eine Abgasreinigungsanlage mit einem Heizer bekennt. Der Heizer kann mit einer Platte oder mit einem Mikrowellengenerator ausgeführt sein:

Aus der DE 199 13 462 A1 ist ein Verfahren bekannt, bei dem eine Harnstoff-Wasserlösung stromaufwärts eines Hydrolysekatalysators in einen Teilstrom eines Abgases einer Verbrennungskraftmaschine eindosiert wird. Durch Auftreffen auf den Hydrolysekatalysator erfolgt eine Hydro- und Thermolyse des Harnstoffes zu Ammoniak, der in einem stromabwärts gelegenen SCR-Katalysator als Reduktionsmittel zum Einsatz kommt. Das hier beschriebene Verfahren weist den Nachteil auf, dass der Hydrolysekatalysator durch die Verdampfung der Harnstoff-Wasserlösung abgekühlt wird. Insbesondere dann, wenn große Mengen Ammoniak benötigt werden, kann es so zumindest in Bereichen des Hydrolysekatalysators zu einer so starken Abkühlung kommen, dass hier die Hydrolysereaktion nicht mehr oder nicht mehr vollständig abläuft. Weiterhin kann es durch die lokal stark diskontinuierliche Abkühlung zu einer Schädigung des Hydrolysekatalysators und insbesondere zu einer Ablösung einer katalytisch aktiven Beschichtung kommen.

Hiervon ausgehend liegt der vorliegenden Erfindung die Aufgabe zugrunde, ein Verfahren vorzuschlagen, mit dem die aus dem Stand der Technik bekannten Nachteile zumindest gelindert werden können.

Diese Aufgabe wird gelöst durch ein Verfahren mit den Merkmalen des unabhängigen Ansprüchs. Vorteilhafte Weiterbildungen sind Gegenstand der abhängigen Ansprüche.

Die Vorrichtung dient zum Bereitstellen eines gasförmigen Stoffgemisches umfassend mindestens einen der folgenden Stoffe:
a) mindestens ein Reduktionsmittel und
b) mindestens einen Reduktionsmittelvorläufer.

Es ist ein Reservoir für eine wässrige Lösung umfassend mindestens einen Reduktionsmittelvorläufer ausgebildet, das mit einer Verdampferkammer in strömungstechnische Verbindung bringbar ist. Weiterhin ist ein Mittel zum Dosieren der wässrigen Lösung in die Verdampferkammer ausgebildet. Die Vorrichtung zeichnet sich dadurch aus, dass Mittel zur Aufheizung der Verdampferkammer ausgebildet sind, mit denen die Verdampferkammer auf eine Temperatur größer oder gleich einer kritischen Temperatur aufheizbar ist, bei der die wässrige Lösung zumindest teilweise verdampft.

Die Verdampferkammer ist Teil einer Verdampfereinheit. Die Verdampfereinheit weist Mittel zum Abscheiden von Tropfen auf die innerhalb einer Zugabeleitung oder in der Verdampferkammer ausgebildet sind. Das Mittel ist mit der Zugabeleitung verbunden, durch die Dampf tritt. In dem Mittel sind eine oder mehrere Prallplatten ausgebildet, die den Dampfstrom zu Umlenkungen zwingen. Die eine oder mehrere Prallplatten und/oder ein Gehäuse des Mittels sind beheizt, insbesondere so, dass abgeschiedene Tropfen ebenfalls verdampft werden.

Besonders bevorzugt umfasst die wässrige Lösung als einen Reduktionsmittelvorläufer Harnstoff und das gasförmige Stoffgemisch umfasst Ammoniak und/oder Harnstoff. Eine entsprechende wässrige Lösung wird unter dem Markennamen "AdBlue" verkauft. Weiterhin kann die wässrige Lösung weitere Stoffe umfassen, die beispielsweise zur Senkung des Schmelzpunktes der Lösung dienen. Insbesondere kann die wässrige Lösung Ameisensäure und/oder Ammoniumformiat umfassen. Eine entsprechende wässrige Lösung wird unter dem Markennamen "Denoxium" verkauft. Unter einer strömungstechnischen Verbindung zwischen dem Reservoir und der Verdampferkammer wird insbesondere verstanden, dass ein Fluid vom Reservoir zur Verdampferkammer fließen kann. Insbesondere können Reservoir und Verdampferkammer durch eine Förderleitung verbunden sein, durch die im Betrieb die wässrige Lösung strömen kann. Besonders bevorzugt ist die kritische Temperatur so gewählt, dass eine vollständige Verdampfung der wässrigen Lösung erfolgt. Unter einem Reduktionsmittelvorläufer wird insbesondere ein Stoff verstanden, der das Reduktionsmittel abspalten oder in dieses umgewandelt werden kann. Das Mittel zum Dosieren der wässrigen Lösung in die Verdampferkammer ist insbesondere so ausgebildet, dass das Dosieren im Eintropen einzelner Tropfen oder eines Tropfenstrahls in die Verdampferkammer erfolgt. Das Mittel zum Dosieren umfasst insbesondere eine entsprechend ausgebildete Düse.

Mittels der Vorrichtung kann in besonders vorteilhafter Weise Reduktionsmittel zum Einsatz in einem SCR-Katalysator in Gasform zur Verfügung gestellt werden. Bevorzugt erfolgt die Zugabe des gasförmigen Stoffgemisches in einem Abgassystem stromaufwärts eines Hydrolysekatalysators. Unter einem Katalysator wird im Rahmen dieser Erfindung insbesondere ein Katalysatorträgerkörper verstanden, welcher mit einer entsprechenden katalytisch aktiven Beschichtung versehen ist. So bezeichnet also beispielsweise ein Hydrolysekatalysator einen Katalysatorträgerkörper, der mit einer Beschichtung versehen ist, die eine Hydrolyse des Reduktionsmittelvorläufers katalysiert. Ein SCR-Katalysator bezeichnet einen Katalysatorträgerkörper, welcher mit einer katalytisch aktiven Beschichtung zur Katalyse der selektiven katalytischen Reduktion von Stickoxiden versehen ist.

So kann in vorteilhafter Weise durch Einsatz der Vorrichtung vermieden werden, dass beim Auftreffen des Reduktionsmittelvorläufers auf den Hydrolysekatalysator letzterer wesentlich abgekühlt wird, da dieser nicht die Verdampfungsenthalpie der wässrigen Lösung aufbringen muss. Dadurch können die schädigenden Folgen einer lokalen Abkühlung des Hydrolysekatalysators vermieden werden. Insbesondere kann so sichergestellt werden, dass auch bei relativ großen Mengen Reduktionsmittelvorläufer beziehungsweise wässriger Lösung, der/die auf den Hydrolysekatalysator trifft, keine so starke Abkühlung des Hydrolysekatalysators erfolgt, dass die Hydrolyse nur unvollständig abläuft.

Besonders bevorzugt ist auch eine Vorrichtung zur selektiven katalytischen Reduktion von Stickoxiden im Abgas einer Verbrennungskraftmaschine, bei der eine Vorrichtung zum Bereitstellen eines gasförmigen Stoffgemisches umfassend mindestens einen der folgenden Stoffe ausgebildet ist:
a) Ammoniak
b) Harnstoff,
wobei ein Reservoir für eine wässrige Harnstoff-Wasserlösung ausgebildet ist, das mit einer Verdampferkammer in strömungstechnische Verbindung bringbar ist, ausgebildet ist, wobei Mittel zur Aufheizung der Verdampferkammer ausgebildet sind, mit denen die Verdampferkammer auf eine Temperatur größer oder gleich einer kritischen Temperatur aufheizbar ist, bei der die wässrige Lösung zumindest teilweise verdampft. Bevorzugt ist stromabwärts der Vorrichtung zum Bereitstellen eines gasförmigen Stoffgemisches ein Hydrolysekatalysator ausgebildet, der wiederum bevorzugt stromaufwärts eines SCR-Katalysators ausgebildet ist.

Gemäß einer vorteilhaften Weiterbildung der Vorrichtung umfasst die Verdampferkammer ein im Wesentlichen abgeschlossenes Volumen, welches lediglich eine erste Öffnung zum Anschluss einer Förderleitung für die wässrige Lösung und eine zweite Öffnung zum Anschluss einer Zugabeleitung zum Abführen des gasförmigen Stoffgemisches aufweist.

Alternativ ist bevorzugt, dass die Verdampferkammer ein im Wesentlichen abgeschlossenes Volumen umfasst, welches lediglich eine erste Öffnung zum Anschluss einer Förderleitung für die wässrige Lösung, eine zweite Öffnung zum Anschluss einer Zugabeleitung zum Abführen des gasförmigen Stoffgemisches und eine dritte Öffnung zur Zugabe von Abgas aufweist.

D. h., dass durch die Förderleitung die wässrige Lösung in die Verdampferkammer gebracht werden kann und dass durch die Zugabeleitung das gasförmige Stoffgemisch aus der Verdampferkammer abgeführt und einem Abgassystem insbesondere stromaufwärts eines Hydrolysekatalysators zugeführt wird. Durch die dritte Öffnung kann eine Verbindung mit der Abgasleitung hergestellt werden.

Insbesondere heißt ein abgeschlossenes Volumen, dass es sich hierbei gerade nicht um einen Katalysatorträgerkörper handelt, welcher beispielsweise beheizt ist, sondern dass hier ein weiteres Bauteil ausgebildet ist, welches weitgehend abgeschlossen ist. Die Querschnitte der ersten und der zweiten Öffnung gemeinsam betragen bevorzugt höchstens 10 % der Oberfläche der Verdampferkammer.

Gemäß einer vorteilhaften Ausgestaltung der Vorrichtung umfassen die Mittel zur Aufheizung der Verdampferkammer mindestens eines der folgenden Bauteile: a) eine elektrische Widerstandsheizung und b) einen Brenner zum Verbrennen eines Brennstoffs.

Bevorzugt umfasst die elektrische Widerstandsheizung einen Heizdraht, welcher in thermischem Kontakt zur Verdampferkammer steht. Besonders bevorzugt ist in diesem Zusammenhang, dass die Verdampferkammer mit dem Heizdraht umwickelt ist oder dieser in die Wandung der Verdampferkammer eingebracht ist. Besonders bevorzugt ist die elektrische Widerstandsheizung deshalb, weil sie in einfacher Art und Weise regelbar ist und insbesondere bei einer entsprechenden Ausgestaltung der Verdampferkammer im Hinblick auf Wahl des Materials und Dicke des Materials sehr dynamisch regelbar ist. Dies bedeutet, dass sehr schnell der Ausstoß an gasförmigem Stoffgemisch an den Bedarf an Reduktionsmittel im Abgassystem einer Verbrennungskraftmaschine anpassbar ist. Alternativ und/oder zusätzlich können die Mittel zur Aufheizung der Verdampferkammer ein Peltier-Element umfassen und/oder die Abwärme von anderen Bauteilen nutzen.

Unter einem Peltier-Element versteht man insbesondere ein elektrisches Bauelement, welches bei Stromdurchfluss eine Temperaturdifferenz erzeugt, die auf dem so genannten Peltier-Effekt beruht. Vorzugsweise umfasst ein Peltier-Element ein oder mehrere Elemente aus p- und n-dotiertem Halbleitermaterial, die abwechselnd über elektrisch leitendes Material miteinander verbunden sind. Das Vorzeichen der Temperaturdifferenz ist abhängig von der Richtung des Stromflusses, so dass sowohl eine Kühlung als auch eine Heizung mit einem Peltier-Element realisierbar ist. Unter einem Brennstoff werden insbesondere Kohlenwasserstoffe und/oder Wasserstoff verstanden. Kohlenwasserstoffe können aus dem entsprechenden Tank der Verbrennungskraftmaschine entnommen werden.

Gemäß einer weiteren vorteilhaften Ausgestaltung der Vorrichtung ist die Verdampferkammer im Wesentlichen kugelsymmetrisch.

Es hat sich herausgestellt, dass bei einer im Wesentlichen kugelsymmetrischen Ausgestaltung der Verdampferkammer eine sehr gleichmäßige Aufheizung des Volumens in der Verdampferkammer erreicht werden kann. Ein möglichst gleichmäßig aufgeheiztes Verdampferkammervolumen ist bevorzugt, weil dadurch die Bildung von Bereichen niedrigerer Temperatur vermieden wird, da sich in diesen Bereichen oftmals aus kondensiertem Reduktionsmittelvorläufer Tropfen bilden, die sich ggf. im Inneren der Verdampferkammer niederschlagen oder aber durch die Zugabeleitung ins Abgassystem abgegeben werden. Eine im Wesentlichen kugelsymmetrische Verdampferkammer erlaubt in vorteilhafter Weise eine möglichst gleichmäßige Temperierung innerhalb der Verdampferkammer.

In diesem Zusammenhang ist es besonders vorteilhaft, dass die Verdampferkammer einen Radius von 2 mm bis 10 mm aufweist

Die hier vorgeschlagenen Radien haben sich als besonders vorteilhaft erwiesen, da hier mit einem relativ geringen Leistungseintrag beispielsweise einer elektrischen Widerstandsheizung eine schnelle, zuverlässige und flexible dynamische Regelung des Ausstoßes des gasförmigen Stoffgemisches erreicht werden konnte. Grundsätzlich sind Radien von 2 mm und mehr möglich und erfindungsgemäß. Als besonders vorteilhaft hat sich beispielsweise ein Radius von 3 bis 4 mm herausgestellt. Der entsprechende Radius kann an die maximal benötigte Menge Reduktionsmittel beziehungsweise an die maximale zu verdampfende Menge wässriger Lösung angepasst werden, so dass beispielsweise für eine Anwendung in einem Personenkraftwagen ein Radius von 2 bis 35 mm vorteilhaft ist, während für eine Anwendung in Lastkraftwagen ein Radius von 50 bis 150 mm von Vorteil ist.

Gemäß einer weiteren vorteilhaften Ausgestaltung der Vorrichtung weist die Verdampferkammer ein Volumen von 30 bis 4000 mm³ auf.

Das Volumen der Verdampferkammer wird insbesondere so gewählt, dass auch bei Höchstlastzuständen der Verbrennungskraftmaschine eine genügend große Menge des gasförmigen Stoffgemisches bereitgestellt werden kann, so dass genügend Reduktionsmittel zur selektiven katalytischen Reduktion (SCR, selective catalytic reduction) zur Verfügung steht. Insbesondere beträgt das Verdampferkammervolumen im Abgassystem von Personenkraftwagen bis zu 150 ml, bevorzugt von etwa 100 mm³ bis 500 mm³. Für das Abgassystem von Lastkraftwagen liegt das Volumen der Verdampferkammer bevorzugt im Bereich von bis zu 750 ml.

Gemäß einer weiteren vorteilhaften Ausgestaltung der Vorrichtung können die Mittel zur Aufheizung der Verdampferkammer eine Heizleistung von bis zu 5000 W (Watt) aufbringen.

Diese Heizleistungen haben sich als besonders vorteilhaft herausgestellt, da mit diesen Heizleistungen auch Spitzen des Bedarfs an Reduktionsmittel durch eine entsprechende Bereitstellung eines entsprechenden Volumens des dampfförmigen Stoffgemisches erreicht werden kann. Insbesondere im Abgassystem von Personenkraftwagen (Pkws) hat sich eine Heizleistung von bis zu 500 W als vorteilhaft herausgestellt, für Lastkraftwagen liegt diese Heizleistung bevorzugt im Bereich von bis zu 1500 W.

Gemäß einer weiteren vorteilhaften Ausgestaltung der Vorrichtung ist eine Förderleitung zur Förderung der wässrigen Lösung in die Verdampferkammer ausgebildet, die die Verdampferkammer mit einem Reservoir verbindet und es ist weiterhin eine ein Fördermittel, mittels der ein Fluid durch die Förderleitung förderbar ist.

Insbesondere kann es sich hierbei um eine Pumpe handeln. Alternativ oder unterstützend dazu ist auch die Förderung der wässrigen Lösung allein aufgrund des hydrostatischen Druckes möglich, bei der also das Reservoir höher ausgebildet ist als die Verdampferkammer, so dass eine Befüllung der Verdampferkammer allein aufgrund des Höhenunterschiedes zwischen Reservoir und Verdampferkammer erfolgt. Die Regelung der in die Verdampferkammer eintretenden Menge an wässriger Lösung kann durch eine Regelung der Pumpe und/oder ein entsprechendes Ventil erfolgen.

Als Pumpe wird insbesondere eine hochgenau dosierbare Pumpe eingesetzt, die einen breiten Bereich von Förderleistung erlaubt.

Die Vorrichtung ist so ausgebildet, dass im Betrieb die Temperatur der Verdampferkammer höchstens 25°C oberhalb und unterhalb einer mittleren Temperatur liegt.

Unter einer Temperatur der Verdampferkammer wird hier insbesondere eine Temperatur der Wand der Verdampferkammer verstanden. Eine genaue Temperierung der Verdampferkammer hat sich in Versuchen als besonders wesentlich herausgestellt, da durch eine möglichst gleichmäßige Temperierung ein Niederschlag von Reduktionsmittel oder Nebenprodukten wirksam vermieden oder zumindest eingeschränkt werden kann. Es hat sich herausgestellt, dass auch nur eine relativ geringe Abweichung von der mittleren - kritischen - Temperatur ausreicht, um unerwünschte Stoffe zum Niederschlag zu bringen. Die Ausbildung der Vorrichtung umfasst insbesondere eine entsprechende Ausbildung der Mittel zum Aufheizen der Verdampferkammer. Diese ist insbesondere so ausgebildet, dass ein sehr gleichmäßiger Energieeintrag in die Verdampferkammer erfolgt. Beispielsweise kann die Verdampferkammer in vorteilhafter Weise von einem Heizleiter umgeben sein. Auch durch eine Auswahl eines entsprechenden Materials kann in vorteilhafter Weise eine sehr gleichmäßige Temperierung der Verdampferkammer erreicht werden.

Gemäß einer weiteren vorteilhaften Ausgestaltung der Vorrichtung weist die Verdampferkammer zumindest in Teilbereichen Mittel zur Erhöhung der Benetzungsfähigkeit der Oberfläche auf.

Hierbei kann es sich insbesondere um eine entsprechende Strukturierung der Oberfläche der Verdampferkammer handeln, die beispielsweise makroskopische Strukturen oder auch eine entsprechende Beschichtung umfassen kann. Insbesondere kann die Verdampferkammer zumindest in Teilbereichen eine Hydrolysekatalysatorbeschichtung umfassen, die die Hydrolyse insbesondere von Harnstoff zu Ammoniak katalysiert.

Gemäß einem weiteren Aspekt der vorliegenden Erfindung wird ein Verfahren zum Bereitstellen eines gasförmigen Stoffgemisches gemäß Anspruch 1 vorgeschlagen, wobei das Stoffgemisch mindestens einen der folgenden Stoffe umfasst:
a) mindestens ein Reduktionsmittel und
b) mindestens einen Reduktionsmittelvorläufer.

Eine wässrige Lösung mindestens eines Reduktionsmittelvorläufers wird in eine Verdampferkammer gefördert, wobei die Verdampferkammer so beheizt wird, dass die wässrige Lösung vollständig zu dem gasförmigen Stoffgemisch verdampft.

Insbesondere erfolgt die Aufheizung der Verdampferkammer so, dass neben einer Verdampfung des Reduktionsmittel Vorläufers in wässriger Lösung auch eine zumindest teilweise thermolytische Zersetzung des Reduktionsmittelvorläufers zu einem Reduktionsmittel erfolgt. Das erfindungsgemäße Verfahren kann bevorzugt in der Vorrichtung durchgeführt werden. Unter einer vollständigen Verdampfung versteht man insbesondere eine Verdampfung von mindestens 90 Gewichts-% der wässrigen Lösung, bevorzugt von 95 Gewichts-%, besonders bevorzugt von mindestens 98 Gewichts-%.

Die Förderung der wässrigen Lösung in die Verdampferkammer erfolgt bevorzugt in Tropfenform, insbesondere in Form einzelner Tropfen und/oder in Form eines Tropfenstrahls. Insbesondere kann die Förderung durch eine entsprechend ausgebildete und ansteuerbare Düse vorgenommen werden.

Gemäß einer vorteilhaften Ausgestaltung des erfindungsgemäßen Verfahrens umfasst die Verdampferkammer ein im Wesentlichen abgeschlossenes Volumen, welches lediglich eine erste Öffnung zum Anschluss einer Förderleitung für die wässrige Lösung und eine zweite Öffnung zum Anschluss einer Zugabeleitung zum Abführen des gasförmigen Stoffgemisches aufweist.

Alternativ ist es möglich, dass die Verdampferkammer ein im Wesentlichen abgeschlossenes Volumen umfasst, welches lediglich eine erste Öffnung zum Anschluss einer Förderleitung für die wässrige Lösung, eine zweite Öffnung zum Anschluss einer Zugabeleitung zum Abführen des gasförmigen Stoffgemisches und eine dritte Öffnung zur Zugabe von Abgas aufweist.

Die Verfahrensführung in der Gestalt, dass. ein im Wesentlichen abgeschlossenes Verdampfervolumen zur Verdampfung der wässrigen Lösung eingesetzt wird, ermöglicht in vorteilhafter Weise eine Verfahrensführung, bei der mit einem relativ geringen Energieeinsatz eine relativ hohe Dampfausbeute der wässrigen Lösung erzielt werden kann. Insbesondere wird die Verfahrensführung so gestaltet, dass durch die Wände des im Wesentlichen abgeschlossenen Verdampfervolumens die Aufheizung und die Verdampfung der wässrigen Lösung erfolgen. Erfindungsgemäß wird die Verdampferkammer nicht mit der flüssigen wässrigen Lösung gefüllt, vielmehr werden lediglich Tropfen der wässrigen Lösung zudosiert oder eingespritzt. Insbesondere kann hierbei eine Düse ausgebildet sein, die die wässrige Lösung in das Verdampfervolumen eindüst. Durch das im Wesentlichen geschlossene Verdampfervolumen der Verdampferkammer kann ein sehr gleichmäßiges Verdampfen der wässrigen Lösung gewährleistet werden.

Gemäß einer weiteren vorteilhaften Ausgestaltung des erfindungsgemäßen Verfahrens wird die Verdampferkammer mit einer elektrischen Widerstandsheizung aufgeheizt.

Alternativ oder zusätzlich hierzu können weitere Mittel zum Aufheizen der Verdampferkammer eingesetzt werden. Insbesondere kann es sich hierbei um die Abwärme anderer Bauteile handeln oder auch um einen zusätzlichen Brenner, welcher mit Kraftstoff betrieben wird und welcher die Verdampferkammer aufheizt. Weiterhin kann mindestens ein Peltier-Element zur Temperierung der Verdampferkammer eingesetzt werden. Unter einer Temperierung wird hierbei insbesondere ein Beheizen oder Kühlen verstanden.

Gemäß einer weiteren vorteilhaften Ausgestaltung des erfindungsgemäßen Verfahrens erfolgt die Temperierung der Verdampferkammer geregelt.

Insbesondere kann eine Regelschleife ausgebildet sein, die mittels mindestens eines Thermoelements die Temperatur an oder in der Verdampferkammer bestimmt und entsprechend eine Regelung vornimmt. Auch andere Temperaturfühler können ausgebildet sein, aus deren Werten auf die Temperatur in der Verdampferkammer zurückgerechnet werden kann. Hierzu kann insbesondere auf mathematische Modelle zurückgegriffen werden, die von der entsprechenden Anlage gebildet wurden. Neben einer reinen Regelung der Aufheizung der Verdampferkammer können weitere Elemente in diesen Regelkreislauf alternativ oder zusätzlich eingebunden werden. Hierbei kann insbesondere die Temperatur eines stromabwärts liegenden Hydrolysekatalysators ebenfalls einer Regelung unterworfen werden.

Die Verdampferkammer wird auf eine mittlere Temperatur von 350 bis 450°C, bevorzugt etwa 370 bis 390°C, insbesondere etwa 380°C aufgeheizt.

Diese Temperaturen ermöglichen in vorteilhafter Weise eine Verdampfung von 90 Gewichts-% der wässrigen Lösung und mehr, bevorzugt von 95 Gewichts-% und mehr, besonders bevorzugt von 98 Gewichts-% und mehr.

Die Verdampferkammer wird auf eine mittlere Temperatur aufgeheizt, von der an keinem Punkt der Verdampferkammer um mehr als +25°C oder - 25°C abgewichen wird.

Dies kann durch eine sehr gleichmäßige Verbindung der Verdampferkammer mit einem entsprechenden Heizleiter erreicht werden. Alternativ ist es auch möglich, dass die Oberfläche der Verdampferkammer in mehrere unterschiedliche Heizzonen aufgeteilt wird, die getrennt geregelt werden, so dass eine sehr feine Justierung der Temperatur der Verdampferkammer möglich ist. Insbesondere wird unter der Temperatur oder der mittleren Temperatur der Verdampferkammer die Temperatur an der äußeren oder inneren Oberfläche der Verdampferkammer verstanden. Die erfindungsgemäße sehr genaue Regelung der Temperatur der Verdampferkammer, die eine Schwankungsbreite von nur maximal +/-5°C um eine mittlere Temperatur erlaubt, ermöglicht in vorteilhafter Weise eine Verfahrensführung, bei der die Wahrscheinlichkeit, dass sich das Reduktionsmittel, der Reduktionsmittelvorläufer oder auch bei einer unerwünschten Nebenreaktion entstehendes Produkt auf der Oberfläche der Verdampferkammer niederschlägt, sehr gering ist. Erstaunlicherweise haben Versuche gezeigt, dass bereits sehr geringe Abweichungen von der mittleren Temperatur in einzelnen Bereichen der Verdampferkammer zu einem Niederschlag von Stoffen führen können. Von daher ist eine sehr präzise Temperaturführung und -regelung von Vorteil.

Die für die Vorrichtung offenbarten Details und Vorteile lassen sich auf das erfindungsgemäße Verfahren übertragen und anwenden. Die für das erfindungsgemäße Verfahren offenbarten Details und Vorteile lassen sich auf die Vorrichtung übertragen und anwenden.

Im Folgenden wird die Erfindung anhand der beigefügten Figuren näher erläutert, ohne dass die Erfindung auf die dort gezeigten Ausführungsbeispiele beschränkt wäre. Es zeigen schematisch:
- Fig. 1: eine Vorrichtung zum Bereitstellen eines gasförmigen Stoffgemisches in einer ersten Ausführungsform als perspektivische Ansicht;
- Fig. 2: die erste Ausführungsform der Vorrichtung zum Bereitstellen eines gasförmigen Stoffgemisches in einer Schnittansicht;
- Fig. 3: eine Förderleitung zur Förderung der wässrigen Lösung von einem Reservoir zur Zugabeleitung;
- Fig. 4: eine Ansicht einer Vorrichtung zur selektiven katalytischen Reduktion von Stickoxid im Abgas einer Verbrennungskraftmaschine;
- Fig. 5: schematisch ein zweites Ausführungsbeispiel einer Verdampfereinheit;
- Fig. 6: eine Vorrichtung zum Bereitstellen eines Reduktionsmittels;
- Fig. 7: schematisch eine alternative Ausführungsform der Verdampfereinheit im Querschnitt;
- Fig. 8: ein Detail einer Mündung einer Dosierleitung in eine Abgasleitung;
- Fig. 9: ein Ausführungsbeispiel einer Vorrichtung zur Bereitstellung eines gasförmigen Stoffgemisches im Schnitt;
- Fig. 10: schematisch eine Vorrichtung zur Bereitstellung eines gasförmigen Stoffgemisches;
- Fig. 11: ein Beispiel einer möglichen Zugabeeinheit des Reduktionsmittelstoffgemisches zum Abgas;
- Fig. 12: eine weitere Möglichkeit einer Zugabeeinheit zur Zugabe des Reduktionsmittelstoffgemisches zum Abgas;
- Fig. 13: ein Ausführungsbeispiel einer Vorrichtung zum Aufbereiten des Abgases einer Verbrennungskraftmaschine;
- Fig. 14: ein Mittel zum Abscheiden von Tropfen;
- Fig. 15 bis 18: Ausführungsbeispiele von Verdampfereinheiten;
- Fig. 19 und 20: ein weiteres Ausführungsbeispiel einer Vorrichtung zur Bereitstellung eines gasförmigen Stoffgemisches;
- Fig. 21: ein weiteres Ausführungsbeispiel einer Vorrichtung zur Aufbereitung von Abgas;
- Fig. 22: ein Detail eines Mündungsbereichs einer Zugabeeinheit in die Abgasleitung und
- Figs. 23 und 24: Beispiele für Wabenkörper als Katalysatorträgerkörper.

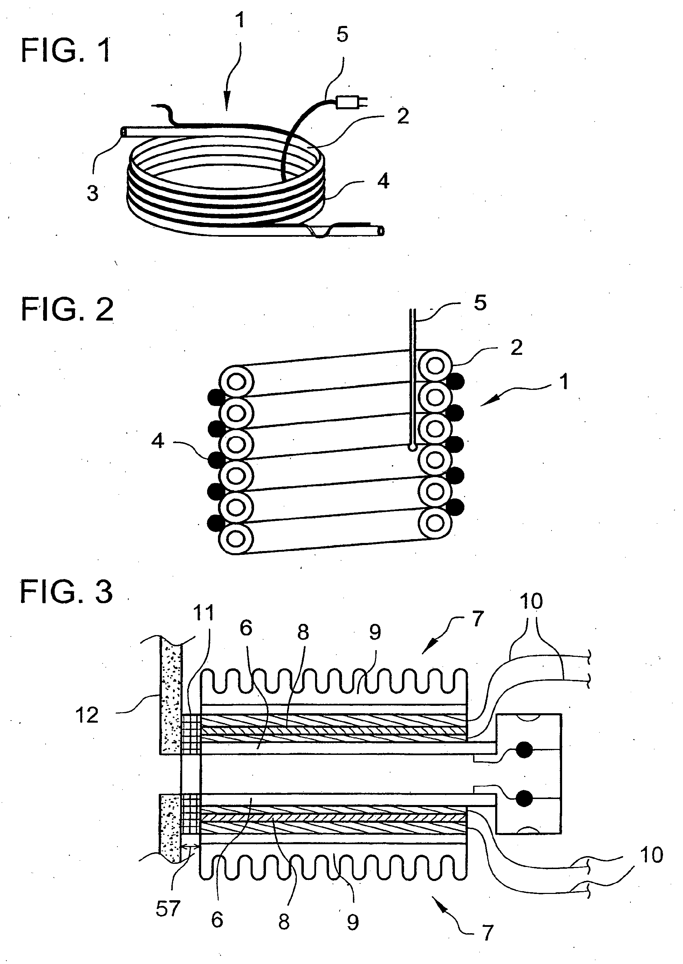

Fig. 1 zeigt schematisch eine Vorrichtung 1 zum Bereitstellen eines gasförmigen Stoffgemisches umfassend mindestens einen der folgenden Stoffe:
a) mindestens ein Reduktionsmittel
b) mindestens einen Reduktionsmittelvorläufer.

Hierbei handelt es sich insbesondere um das Reduktionsmittel Ammoniak und den Reduktionsmittelvorläufer Harnstoff. Die Vorrichtung 1 umfasst eine Zugabeleitung 2 mit Abgabeöffnung 3. Weiterhin sind Mittel 4 zur Aufheizung der Zugabeleitung 2 ausgebildet, mit denen die Zugabeleitung 2 über eine erste kritische Temperatur aufheizbar ist, die größer als die Siedetemperatur von Wasser ist. Die Vorrichtung 1 umfasst weiterhin ein hier noch nicht gezeigtes Reservoir, das mit der Zugabeleitung 2 in strömungstechnische Verbindung bringbar ist. D. h. insbesondere, dass ein im Reservoir gespeichertes Fluid wie beispielsweise eine wässrige Lösung umfassend mindestens einen Reduktionsmittelvorläufer im Betrieb durch die Zugabeleitung 2 hin zur Abgabeöffnung 3 strömen kann. Durch diese Vorrichtung 1 kann ein gasförmiges Stoffgemisch bereitgestellt werden, welches mindestens ein Reduktionsmittel und/oder mindestens einen Reduktionsmittelvorläufer enthält.

Im vorliegenden Ausführungsbeispiel sind die Mittel 4 zur Aufheizung der Zugabeleitung 2 gemeinsam mit dieser spiralförmig aufgewickelt. Dadurch wird ein durch die Zugabeleitung 2 strömendes Fluid aufgeheizt und schlussendlich verdampft. Hierdurch wird durch die Abgabeöffnung 3 ein gasförmiges Stoffgemisch abgegeben, welches zumindest mindestens einen Reduktionsmittelvorläufer enthält. Je nach Wahl der Temperatur der Mittel 4 zur Aufheizung der Zugabeleitung 2 kann sogar bereits eine zumindest teilweise Thermolyse des Reduktionsmittelvorläufers in der Zugabeleitung 2 erfolgen, so dass das durch die Abgabeöffnung abgegebene gasförmige Stoffgemisch neben einem Reduktionsmittelvorläufer wie beispielsweise Harnstoff auch bereits Reduktionsmittel wie beispielsweise Ammoniak enthält.

Weiterhin umfasst die Vorrichtung 1 zum Bereitstellen eines gasförmigen Stoffgemisches auch einen Messfühler 5, mit dem die Temperatur an mindestens einer Stelle der Zugabeleitung 2 gemessen werden kann. Bei dem Messfühler 5 kann es sich beispielsweise um ein übliches Thermoelement oder einen üblichen Thermowiderstand handeln. Die Vorrichtung 1 und/oder die einzelnen Komponenten, die einen elektrischen Anschluss benötigen, umfassen bevorzugt einen Kabelschwanz zur Realisierung der elektrischen Anschlüsse. Unter einem Kabelschwanz wird insbesondere eine Kabelverbindung verstanden, die mindestens einen halben Meter, bevorzugt mindestens einen Meter lang ist. Dies ermöglicht die Ausbildung von Steckkontakten in Bereichen, die insbesondere in Automobilen nur geringen Umwelteinflüssen wie Spritzwasser, Steinschlag oder ähnlichem ausgesetzt sind.

Fig. 2 zeigt die Vorrichtung 1 aus Fig. 1 im Schnitt. Deutlich zu erkennen ist die Zugabeleitung 2, durch die im Betrieb die wässrige Lösung umfassend mindestens einen Reduktionsmittelvorläufer strömen kann sowie die Mittel 4 zur Aufheizung der Zugabeleitung 2. Die Zugabeleitung 2 kann einen konstanten Querschnitt aufweisen, dieser kann jedoch auch wie im vorliegenden Beispiel variabel sein. Der durchströmbare Querschnitt der Zugabeleitung 2 liegt hierbei allerdings bevorzugt zwischen 0,75 mm² Und 20 mm², bevorzugt liegt der durchströmbare Querschnitt im Bereich von etwa 3 mm². Diese durchströmbaren Querschnitte haben sich als vorteilhaft erwiesen, da einerseits eine schnelle und im Wesentlichen vollständige Verdampfung der wässrigen Lösung bei einem solchen Querschnitt möglich ist und andererseits der Querschnitt so groß ist, dass die Bildung von Ablagerungen im Inneren der Zugabeleitung 2 im Wesentlichen vermieden wird. Fig. 2 zeigt auch den Messfühler 5 zur Bestimmung der Temperatur der Zugabeleitung 2.

Hierbei werden die Mittel 4 zur Aufheizung der Zugabeleitung 2 so betrieben, dass im Betrieb die Temperatur über die Länge der Zugabeleitung 2 höchstens 5°C oberhalb und unterhalb einer mittleren Temperatur liegt. Die mittlere Temperatur entspricht dabei im Wesentlichen der ersten kritischen Temperatur. Die Zugabeleitung 2 ist insbesondere aus einer Kupferlegierung ausgebildet.

Fig. 3 zeigt schematisch die Förderleitung 6, über die die Zugabeleitung 2 im Betrieb mit einem hier noch nicht gezeigten Reservoir verbindbar ist. Die Förderleitung 6 weist Mittel 7 zum Temperieren auf. Die Mittel 7 zum Temperieren umfassen in diesem Ausführungsbeispiel jeweils mehrere Peltier-Elemente 8 und einen Kühlkörper 9. Die Peltier-Elemente 8 sind jeweils mit elektrischen Anschlüssen 10 versehen, über die sie mit Strom versorgt werden können. Je nach Polung des Stroms werden dabei die Peltier-Elemente 8 zum Aufheizen oder zum Abkühlen eingesetzt, so dass mit ihnen eine Grundtemperierung der Förderleitung 6 erreicht werden kann. Der Kühlkörper 9 dient insbesondere zum Abstrahlen von Wärmeenergie, wenn durch das bzw. die Peltier-Elemente 8 die Förderleitung 6 gekühlt wird.

Über eine Verbindungseinheit 11 kann die Förderleitung 6 mit einem weiteren Bauteil verbunden werden. Je nach Ausführung der Vorrichtung kann dies entweder die bereits oben bezeichnete Zugabeleitung 2 oder allgemein eine Verdampfereinheit 12 sein. Teil der Verdampfereinheit 12 kann dann die Zugabeleitung 2 sein. Allgemein ist die Verbindungseinheit 11 zumindest teilweise aus einem Material mit einer Wärmeleitfähigkeit von weniger als 10 W/m K (Watt pro Meter und Kelvin) ausgebildet. Die Verbindungseinheit 11 ist insbesondere aus einem keramischen Werkstoff und/oder Polytetrafluorethylen (PTFE) ausgebildet. Die Verbindungseinheit 11 ist insbesondere so aufgebaut, dass über eine Länge 57 der Verbindungseinheit 11 ein Temperaturgradient von 40 K/mm (Kelvin pro Millimeter) und mehr aufrechterhalten werden kann. Dies erlaubt eine Verfahrensführung, bei der die Verdampfereinheit 12 und/oder die Zugabeleitung 2 eine deutlich höhere Temperatur aufweist als die Förderleitung 6. Beispielsweise kann die Verdampfereinheit eine Temperatur von 300°C oder mehr, 400°C oder mehr oder von 420°C oder mehr aufweisen und so zu einer im Wesentlichen vollständigen Verdampfung der wässrigen Lösung innerhalb der Verdampfereinheit 12 führen, während die Förderleitung 6 lediglich ein Temperaturniveau von 70°C oder mehr, 80°C oder mehr, oder 90°C oder mehr aufweist, um zu gewährleisten, dass die wässrige Lösung noch nicht in der Förderleitung 6 verdampft.

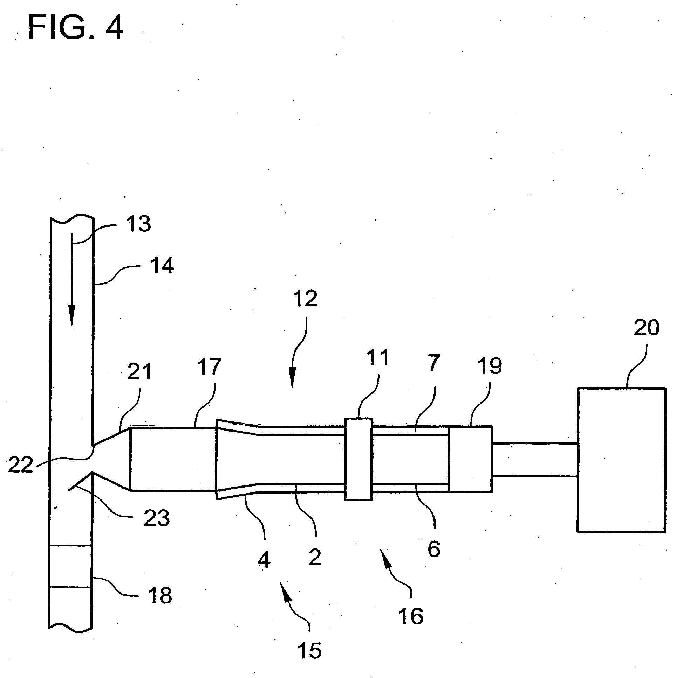

Fig. 4 zeigt schematisch eine Vorrichtung 15 zur Aufbereitung des Abgases 13 einer nicht gezeigten Verbrennungskraftmaschine. Das Abgas 13 der Verbrennungskraftmaschine strömt durch eine Abgasleitung 14. Die Vorrichtung 15 zur Aufbereitung der Gase 13 einer Verbrennungskraftmaschine umfasst einen Reduktionsmittellösungsverdampfer 16, einen Hydrolysekatalysator 17 und einen SCR-Katalysator 18. Im Reduktionsmittellösungsverdampfer 16 wird eine wässrige Lösung umfassend einen Reduktionsmittelvorläufer verdampft. Insbesondere wird als Reduktionsmittelvorläufer Harnstoff verwendet. Der Reduktionsmittellösungsverdampfer 16 umfasst in diesem Ausführungsbeispiel eine Verdampfereinheit 12 umfassend eine durch Mittel 4 zur Aufheizung der Zugabeleitung 2 geheizte Zugabeleitung 2. Diese ist über eine Verbindungseinheit 11 mit einer Förderleitung 6 verbunden. Die Förderleitung 6 ist von Mitteln 7 zum Temperieren der Förderleitung 6 umgeben, die beispielsweise wie oben gezeigt ein oder mehrere Peltier-Elemente 8 und/oder einen Kühlkörper 9 umfassen können. Über Fördermittel 19 kann die wässrige Lösung mindestens eines Reduktionsmittelvorläufers aus einem entsprechenden Reservoir 20 in die Förderleitung 6 gefördert werden. In der Verdampfereinheit 12 wird ein Gas bereitgestellt, welches zumindest einen Reduktionsmittelvorläufer wie beispielsweise Harnstoff und ggf. auch bereits aus der Thermolyse von Harnstoff entstandenen Ammoniak umfasst. Dieses gasförmige Stoffgemisch wird in dem stromabwärts des Reduktionsmittellösungsverdampfers 16 ausgebildeten Hydrolysekatalysator 17 eingeleitet. Der Hydrolysekatalysator 17 ist so ausgebildet, dass durch eine entsprechende auf ihn aufgebrachte katalytisch aktive Beschichtung insbesondere Harnstoff zu Ammoniak hydrolysiert wird. Allgemein dient der Hydrolysekatalysator 17 zur Hydrolyse eines Reduktionsmittelvorläufers zu einem Reduktionsmittel. Das den Hydrolysekatalysator 17 verlassende Gas, welches ein Reduktionsmittel enthält und als Reduktionsmittelstoffgemisch bezeichnet wird, wird über eine Dosierleitung 21 in die Abgasleitung 14 zugegeben. Die Dosierleitung 21 mündet in einer Dosieröffnung in die Abgasleitung 14, die stromaufwärts des SCR-Katalysators 18 liegt. Stromabwärts der Dosieröffnung 22 und stromaufwärts des SCR-Katalysators 18 sind Vermischungsmittel 23 in Form eines Leitblechs ausgebildet, die eine Vermischung des Reduktionsmittelstoffgemisches mit dem Abgas 13 bewirken.

Somit erreicht den SCR-Katalysator eine Mischung aus Reduktionsmittel und Abgas, welches zu einer Reduktion der im Abgas 13 enthaltenen Stickoxide im SCR-Katalysator 18 führt. Bevorzugt wird hierbei eine solche Menge von Reduktionsmittelstoffgemisch bereitgestellt, dass eine möglichst vollständige Umsetzung der Stickoxide im Abgas 13 im SCR-Katalysator 18 erfolgen kann.

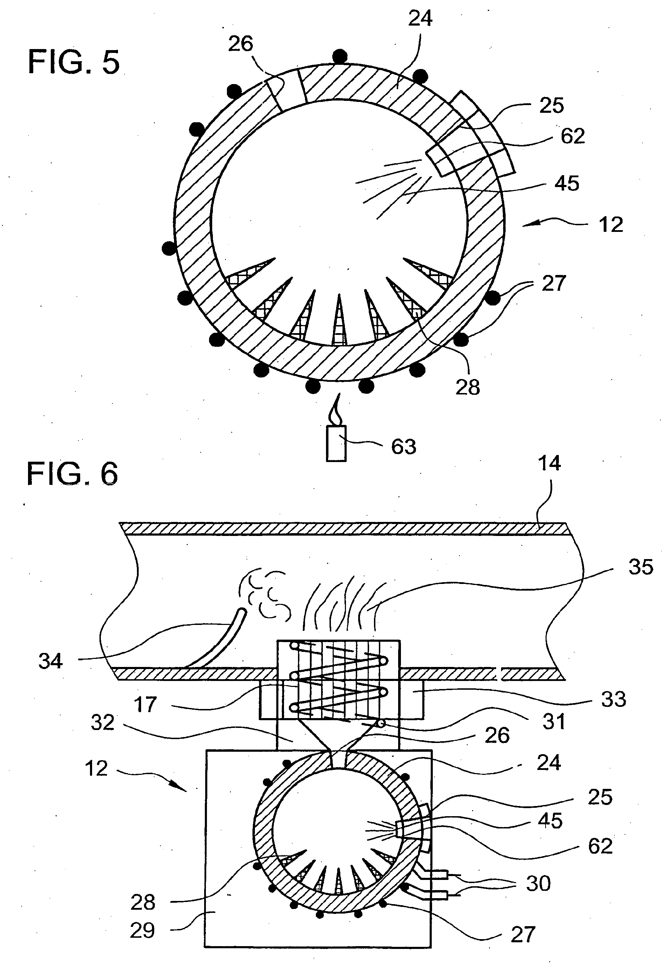

Fig. 5 zeigt schematisch ein weiteres Ausführungsbeispiel einer Verdampfereinheit 12. Diese Darstellung zeigt die Verdampfereinheit 12 im Schnitt. Die Verdampfereinheit 12 umfasst eine Verdampferkammer 24, die ein im Wesentlichen abgeschlossenes Volumen umfasst. In diesem Ausführungsbeispiel weist die Verdampferkammer 24 lediglich eine erste Öffnung 25 zum Anschluss einer hier nicht gezeigten Förderleitung 6 zur Förderung der wässrigen Lösung und eine zweite Öffnung 26 zum Anschluss einer hier nicht gezeigten Zugabeleitung 2 zum Abführen des gasförmigen Stoffgemisches auf. In der ersten Öffnung 25 ist eine Düse 62 als Mittel zum Dosieren der wässrigen Lösung 45 in die Verdampferkammer 24 ausgebildet. Mit dieser Düse 62 wird die wässrige Lösung 45 in die Verdampferkammer 24 zudosiert. Die Verdampfereinheit 12 weist zusätzlich Mittel zur Aufheizung der Verdampferkammer 24 auf. Diese Mittel sind im vorliegenden Ausführungsbeispiel durch entsprechende Heizleiter 27 gebildet, die in Kontakt mit der Verdampferkammer 24 stehen. Wie hier gezeigt kann dieser Heizleiter 27 asymmetrisch ausgebildet sein, d. h. in den Bereichen, die der ersten Öffnung 25 im Wesentlichen gegenüberliegen ist eine größere Dichte von Heizleitern pro Flächeneinheit ausgebildet als in den Bereichen, die nicht im Wesentlichen gegenüber der ersten Öffnung 25 liegen. Weiterhin umfassen diese Mittel hier kumulativ ein Mittel 63 zum Verbrennen von Kohlenwasserstoffen wie beispielsweise einen Brenner. Ein solcher Brenner kann auch geeignet sein, eine flammlose Verbrennung von Kohlenwasserstoffen durchzuführen.

Die Verdampferkammer 24 ist bevorzugt aus einem Werkstoff umfassend mindestens eines der folgenden Materialien ausgebildet: a) Kupfer; b) Aluminium; c) Edelstahl; d) Nickel-Basiswerkstoff und e) Chrom-Nickel-Stahl. Das Volumen der Verdampferkammer 24 beträgt bevorzugt 1,5 bis 10 cm³. Bevorzugt ist hierbei eine Ausbildung der Verdampferkammer 24 zumindest in Teilbereichen aus Aluminium. Im Betrieb wird der Heizleiter 27 bevorzugt mit einer Heizleistung betrieben, die bei bis zu etwa einem Kilowatt pro Sekunde liegt, wobei die maximale Heizleistung in Abhängigkeit von der Anwendung festgelegt wird. Die maximale Heizleistung liegt bei Personenkraftwagen bevorzugt bei etwa 500 bis 700 W/s, bei Lastkraftwagen bei etwa 1200 bis 1500 W/s. Die Wärmekapazität der Verdampferkammer 24 liegt bevorzugt bei weniger als 120 J/K, besonders bevorzugt bei 100 bis 110 J/K. Die erste Öffnung 25 und die zweite Öffnung 26 schließen bevorzugt einen Winkel von 30 bis 70° ein. Die wässrige Lösung 45 wird bevorzugt mit bis zu 150 ml/min in die Verdampferkammer 24 gefördert, bevorzugt mit bis zu 100 ml/min, besonders bevorzugt mit bis zu 30 ml/min. Bevorzugt weist die Verdampferkammer 24 im Bereich der zweiten Öffnung 26 Mittel auf, mit denen ein Eindringen von Tropfen in die zweite Öffnung 26 vermieden werden kann. Insbesondere handelt es sich hierbei um Mittel, mittels derer eine zwischen dem Tropfen und der Wand der Verdampferkammer 24 liegender Gasfilm durchbrochen werden kann. Insbesondere handelt es sich hierbei um Vorsprünge der Wandungen oder ähnliches. Die Strukturen 28 können ebenfalls in diesem Bereich ausgebildet sein.

Weiterhin weist die Verdampferkammer 24 im Inneren eine oder mehrere Strukturen 28 auf, mittels derer eine größere Oberfläche zur Verdampfung der wässrigen Lösung geschaffen wird. Diese Strukturen 28 sind im vorliegenden Ausführungsbeispiel relativ groß eingezeichnet, es kann sich hierbei aber auch um eine strukturierte Oberfläche handeln, die beispielsweise durch Aufbringung einer entsprechenden Beschichtung auf die innere Oberfläche der Verdampferkammer 24 erreicht werden kann. Alternativ oder zusätzlich können diese Strukturen 28 auch makroskopische Strukturen umfassen, die eine Strukturamplitude von einigen Millimetern oder sogar mehr aufweisen. Allgemein sind diese Strukturen 28 als Mittel zur Erhöhung der Benetzungsfähigkeit der Oberfläche der Verdampferkammer 24 zu verstehen.

Fig. 6 zeigt schematisch das erste Ausführungsbeispiel der Verdampferkammer 24 im Anschluss an eine Abgasleitung 14. Hierbei ist die Verdampferkammer 24 mit einer Ummantelung 29 versehen. Diese Ummantelung 29 wird bevorzugt aus einem entsprechenden thermischen Isolator ausgebildet, welcher Wärmeverluste an die Umgebung reduziert. Die Mittel 27 zur Aufheizung der Verdampferkammer 24 sind über Heizleiteranschlüsse 30 mit einer nicht gezeigten Stromquelle verbindbar.

Über die zweite Öffnung 26 ist die Verdampfereinheit 12 mit einem Hydrolysekatalysator 17 verbunden. Der Hydrolysekatalysator 17 weist Mittel 31 zum Temperieren des Hydrolysekatalysators 17 auf, die im vorliegenden Ausführungsbeispiel aus einem entsprechenden Heizdraht bestehen, mit welchem der Hydrolysekatalysator 17 umwickelt ist. Um den Hydrolysekatalysator 17 herum ist eine entsprechende Ummantelung 32 ausgebildet, die insbesondere eine thermische Isolierung des Hydrolysekatalysators 17 gegenüber der Umgebung darstellt, um auftretende Wärmeverluste möglichst zu minimieren. Im vorliegenden Ausführungsbeispiel ist der Hydrolysekatalysator direkt mit der Abgasleitung 14 verbunden, indem er in diese hineinragt. In der Abgasleitung 14 ist eine entsprechende Bohrung ausgebildet, in die der Hydrolysekatalysator 17 bzw. dessen Ummantelung 32 möglichst dicht eingebracht werden kann. Durch entsprechende Verbindungsmittel 33 kann eine möglichst dichte Verbindung zwischen Hydrolysekatalysator 17 und Abgasleitung 14 hergestellt werden. Weiterhin sind als passive Vermischungsmittel ein Leitblech 34 ausgebildet, mittels dem das den Hydrolysekatalysator 17 verlassende Reduktionsmittelstoffgemisch 35 mit dem in der Abgasleitung 14 strömenden Abgas vermischt wird.

Durch die Verdampfereinheit 12 wird im Betrieb ein gasförmiges Stoffgemisch aus einer wässrigen Lösung hergestellt, die Harnstoff als Reduktionsmittelvorläufer enthält. Das in der Verdampfereinheit 12 entstandene gasförmige Stoffgemisch enthält zumindest Harnstoff und gegebenenfalls auch bereits Ammoniak, welcher durch Thermolyse des entsprechenden Harnstoffs entstanden ist. Dieses Stoffgemisch wird über die zweite Öffnung 26 in den Hydrolysekatalysator 17 geführt, in dem eine im Wesentlichen vollständige Hydrolyse des Harnstoffs zu Ammoniak erfolgt. Hierbei entsteht im Hydrolysekatalysator ein Reduktionsmittelstoffgemisch 35, welches Ammoniak umfasst. Insbesondere ist eine Verfahrensführung bevorzugt, bei der 98 % und mehr des Harnstoffs schlussendlich in Ammoniak umgewandelt werden.

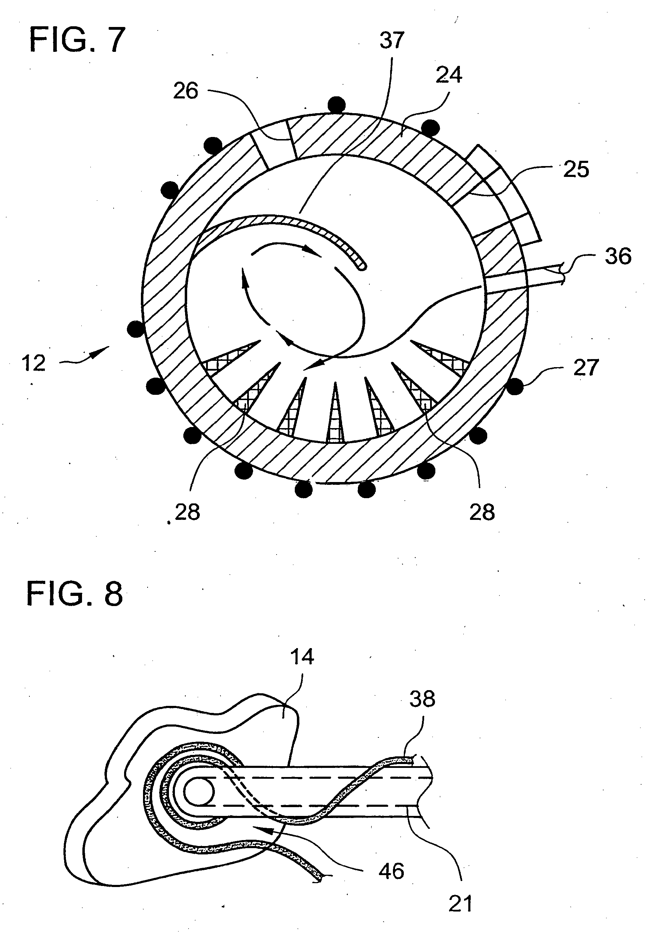

Fig. 7 zeigt schematisch eine alternative Ausgestaltung der Verdampfereinheit aus den Fig. 5 und 6. Im Unterschied zu dem ersten oben gezeigten Ausführungsbeispiel weist dieses zusätzlich eine dritte Öffnung 36. Durch diese dritte Öffnung 36 kann im Betrieb kontinuierlich oder pulsatil Abgas in die Verdampferkammer 24 eingeleitet werden. Hierdurch kann im Vergleich zu dem ersten Ausführungsbeispiel eine bessere Verteilung des Harnstoffs im entstehenden Gas erreicht werden. Zudem lässt sich eine solche Verdampfereinheit 12 auch zur Verdampfung von Festharnstoff einsetzen, da durch die durch die dritte Öffnung 36 eingebrachten Abgase der Verbrennungskraftmaschine Wasser in die Verdampferkammer 24 eingebracht wird, welches später im Hydrolysekatalysator 17 zur Hydrolyse des Harnstoffs zu Ammoniak eingesetzt werden kann.

Fig. 8 zeigt schematisch die Mündung einer Dosierleitung 21 in die Abgasleitung 14 als Teil einer entsprechenden Zugabeeinheit 46. Hierbei ist die Dosierleitung 21 von einem Heizleiter 38 umgeben, welcher auch um die Mündung der Dosierleitung 21 in die Abgasleitung 14 herum ausgebildet ist.

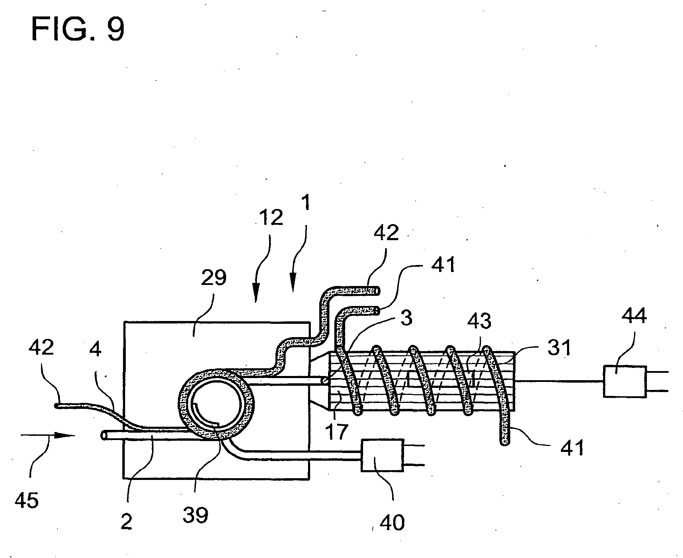

Fig. 9 zeigt schematisch eine weitere Möglichkeit einer Vorrichtung 1 zum Bereitstellen eines ein Reduktionsmittel umfassenden gasförmigen Stoffgemisches in einem ersten Schnittpunkt. Die Vorrichtung 1 umfasst eine Zugabeleitung 2, die mit einem entsprechenden Mittel 4 zur Auffassung der Zugabeleitung 2 umwickelt ist oder mit dieser gemeinsam aufgewickelt ist. Zugabeleitung 2 und Mittel 4 zur Aufheizung der Zugabeleitung 2 sind gemeinsam in einer Ummantelung 29 ausgebildet. Innerhalb der Wicklung der Zugabeleitung 2 ist ein erster Temperaturmessfühler 39 ausgebildet. Dieser erste Temperaturmessfühler 39 ist über ein erstes Verbindungselement 40 mit einer entsprechenden hier nicht gezeigten Steuereinheit verbindbar. Über die Abgabeöffnung 3 der Zugabeleitung 2 ist die Verdampfereinheit 12 mit einem Hydrolysekatalysator 17 verbunden. Der Hydrolysekatalysator 17 weist eine Beschichtung auf, die die Hydrolyse von Harnstoff zu Ammoniak katalysiert. Der Hydrolysekatalysator 17 ist mit Mitteln 31 zur Temperierung des Hydrolysekatalysators umgeben, die einen entsprechend ausgebildeten Heizdraht umfassen. Diese Mittel 31 zur Temperierung des Hydrolysekatalysators 17 können durch entsprechende erste Heizleiter-Anschlüsse 41 mit einer entsprechenden Stromversorgung elektrisch leitend verbunden werden. Entsprechendes gilt für die Mittel 4 zur Aufheizung der Zugabeleitung 2, die über entsprechende zweite Heizleiteranschlüsse 42 mit einer entsprechenden Stromversorgung versehen werden können. Der Hydrolysekatalysator 17 weist einen zweiten Temperaturmessfühler 43 auf, welcher über ein entsprechendes zweites Verbindungselement 44 mit einer nicht gezeigten Steuereinheit verbunden werden kann. Mittels des zweiten Temperaturmessfühlers 43 ist die Temperatur innerhalb oder am Hydrolysekatalysator 17 bestimmbar.

Im Betrieb wird eine wässrige Harnstofflösung 45 in die Zugabeleitung 2 gefördert. Durch die Mittel 4 zur Aufheizung der Zugabeleitung 2 erfolgt eine Aufheizung der Zugabeleitung 2 und damit eine Verdampfung dieser wässrigen Harnstofflösung und ggf. je nach Temperierung zu einer zumindest teilweisen Thermolyse des enthaltenen Harnstoffs zu Ammoniak. Durch die Abgabeöffnung 3 wird das entsprechende Gasförmige Stoffgemisch in den Hydrolysekatalysator 17 gegeben, dem eine Hydrolyse, bevorzugt eine im Wesentlichen vollständige Hydrolyse des umfassten Harnstoffs zu Ammoniak stattfindet. Den Hydrolysekatalysator 17 verlässt ein entsprechendes Reduktionsmittelstoffgemisch 35, welches in einer Abgasleitung 14 des Abgassystems einer Verbrennungskraftmaschine einleitbar ist. Bevorzugt ist hierbei eine Verfahrensführung, bei der durch die Temperaturmessfühler 39, 43 die Temperaturen der Verdampfereinheit 12 und/oder des Hydrolysekatalysators 17 überwacht werden und beide Bauteile 12, 17 über die entsprechenden Mittel 4, 31 beheizbar sind.

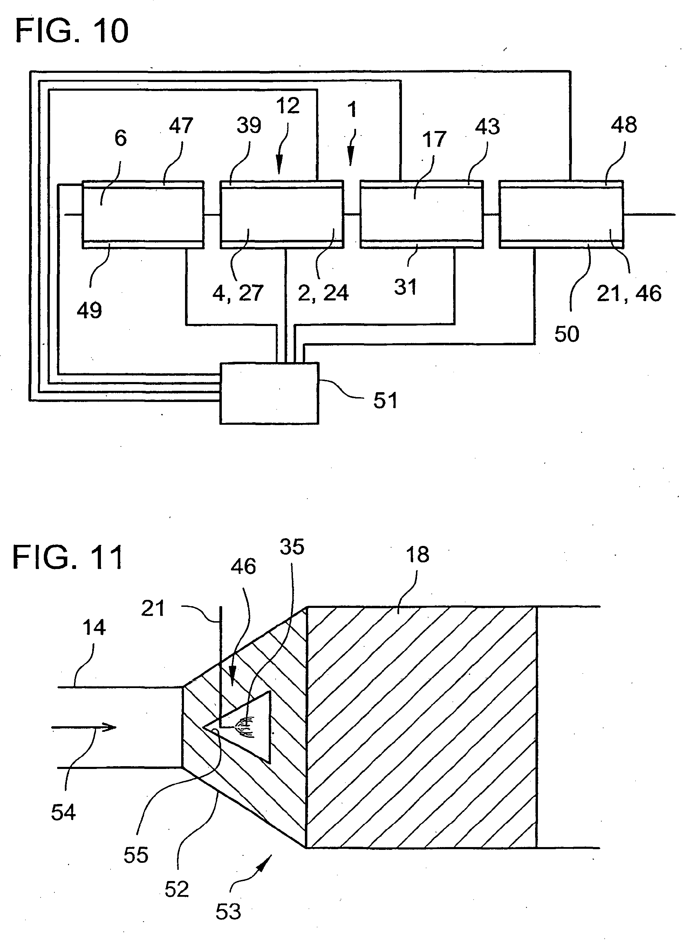

Fig. 10 zeigt schematisch eine Vorrichtung 1 zur Bereitstellung eines gasförmigen Stoffgemisches 35 umfassend mindestens ein Reduktionsmittel. Dieses umfasst sequentiell eine Förderleitung 6, mittels derer eine wässrige Lösung aus einem nicht gezeigten Reservoir in eine Verdampfereinheit 12 gefördert wird. An die Verdampfereinheit 12 schließt sich ein Hydrolysekatalysator 17 und an diesen eine Dosierleitung 21 zur Zugabe des entsprechenden Stoffgemisches zu einer nicht gezeigten Abgasleitung 14 oder eine Zugabeeinheit 46 zur Zugabe des Reduktionsmittelstoffgemisches an die Abgasleitung 14 an. Die Verdampfereinheit 12 weist einen dritten Temperaturmessfühler 47 auf. Mit diesem dritten Temperaturmessfühler 47 kann die Temperatur der oder in der Förderleitung 6 gemessen werden. Optional weist die Dosierleitung 21 und/oder die Zugabeeinheit 46 einen vierten Temperaturmessfühler 48 auf, mit dem die Temperatur der Dosierleitung 21 und/oder der Zugabeeinheit 46 oder die Temperatur in der Dosierleitung 21 und/oder der Zugabeeinheit 46 bestimmt werden kann. Die Verdampfereinheit 12 weist Mittel 4 zur Aufheizung der Zugabeleitung 2 und/oder Mittel 27 zur Aufheizung der Verdampferkammer 24 auf. Der Hydrolysekatalysator 17 kann optional oder als Alternative und/oder als Zusatz zu den Mitteln 4, 27 Mittel 31 zur Temperierung des Hydrolysekatalysators 17 aufweisen. Optional, alternativ und/oder zusätzlich weist die Förderleitung 6 Temperiermittel 49 auf, mittels derer die Förderleitung 6 temperiert werden kann. Insbesondere sind hier ein oder mehrere Peltier-Elemente möglich, vorteilhaft und erfindungsgemäß. Die Dosierleitung 21 und/oder die Zugabeeinheit 46 weisen Zugabetemperiermittel 50 auf, mittels derer die Dosierleitung 21 und/oder die Zugabeeinheit 46 temperiert werden kann. Auch hier ist der Einsatz mindestens eines Peltier-Elementes vorteilhaft.

Sämtliche ausgebildete Temperiermittel 4, 27, 31, 49, 50 und sämtliche ausgebildete Temperaturmessfühler 39, 43, 47, 48 sind mit einer Steuereinheit 51 verbunden. Mittels dieser Steuereinheit 51 erfolgt eine Regelung der Temperatur in einem Regelkreises, welcher mindestens ein Mittel 4, 27, 31, 49, 50 zum Temperieren und mindestens einen Temperaturmessfühler 39, 43, 47, 48 umfasst. Bevorzugt ist die Zahl der Temperaturmessfühler 39, 43, 47, 48 größer als die Zahl der Mittel 4, 27, 31, 49, 50 zum Temperieren der Bauteile 6, 2, 24, 17, 21, 46. Die Steuereinheit 51 ist bevorzugt mit einer Steuerung der Verbrennungskraftmaschine verbunden oder in diese integriert. Die Daten der Steuerung der Verbrennungskraftmaschine und die Betriebsparameter der Verbrennungskraftmaschine können in vorteilhafter Weise bei der Steuerung der Verdampfung und/oder der Förderung zu der Verdampfungseinheit 12 berücksichtigt werden.

Fig. 11 zeigt schematisch einen Ausschnitt aus einer Vorrichtung zur Bereitstellung eines gasförmigen Stoffgemisches. In einer Abgasleitung 14 ist vor einem SCR-Katalysator 18 ein Wabenkörper 52 mit für ein Fluid durchströmbaren Kanälen ausgebildet, welcher Teil eines entsprechenden Vermischungsmittels 53 ist. Der Wabenkörper 52 ist so ausgebildet, dass das Abgas diesen zumindest zum Teil in einem Winkel zur Hauptströmungsrichtung des Abgases durchströmen kann. Die Hauptströmungsrichtung 54 wird dabei durch einen entsprechenden Pfeil in Fig. 11 angedeutet. Im vorliegenden Ausführungsbeispiel ist der Wabenkörper 52 konisch ausgebaut. Der Wabenkörper weist insbesondere eine größere Aussparung 55 auf, die frei von Kanälen ist. In diese Aussparung 55 mündet die Dosierleitung 21 als Teil der Zugabeeinheit 46 durch die im Betrieb das Reduktionsmittelstoffgemisch 35 eingegeben wird.

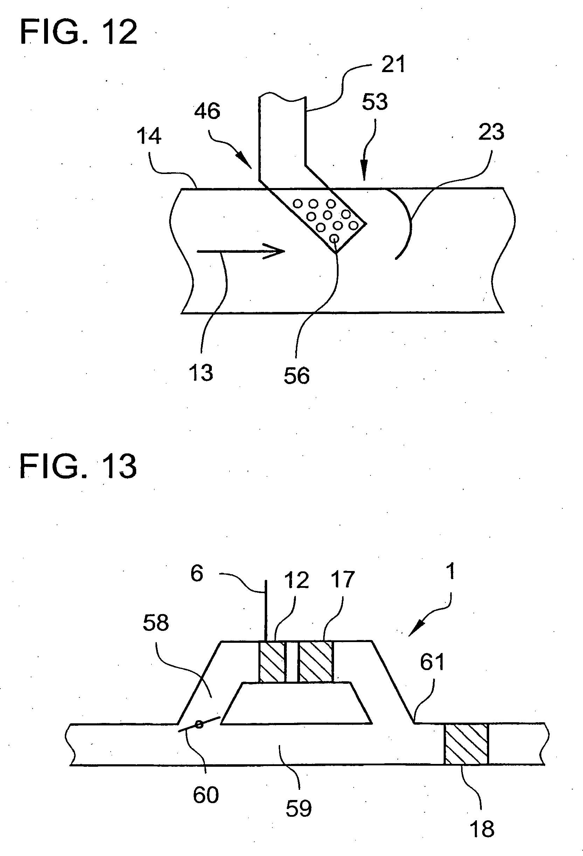

Fig. 12 zeigt schematisch ein Beispiel einer Zugabeeinheit 46 mit einer Dosierleitung 21 zur Zugabe des Reduktionsmittelstoffgemisches in eine Abgasleitung 14. Hierbei durchdringt die Dosierleitung 21 die Wandung der Abgasleitung 14 in einem gekrümmten Zustand. Die Dosierleitung 21 weist in dem Bereich, welcher in die Abgasleitung 14 hineinragt, Perforationen 56 auf. Hierbei ist die Krümmung bzw. der gekrümmte Eintritt der Dosierleitung 21 in die Abgasleitung 14 nicht zwingend, genauso gut könnte die Dosierleitung 21 auch senkrecht bzw. gerade in die Abgasleitung 14 eintreten. Zusätzlich ist hier ein Leitblech 23 ausgebildet, welches zu einer weiter verbesserten Vermischung des Reduktionsmittelstoffgemisches mit dem Abgas 13 in der Abgasleitung 14 führt.

Fig. 13 zeigt schematisch eine Ausgestaltung der Vorrichtung 1 zur Aufbereitung eines Abgases einer nicht gezeigten Verbrennungskraftmaschine. In einem ersten Abgasstrang 58 sind hierbei die Verdampfungseinheit 12 und der Hydrolysekatalysator 17 ausgebildet. Über ein Mittel 60 zur Strömungsleitung wird eine Verteilung des Abgases auf den ersten 58 und einen zweiten Abgasstrang 59 erreicht. Stromabwärts der Einmündung 61 des ersten Abgasstrangs 58 in den zweiten Abgasstrang 59 ist der SCR-Katalysator 18 ausgebildet.

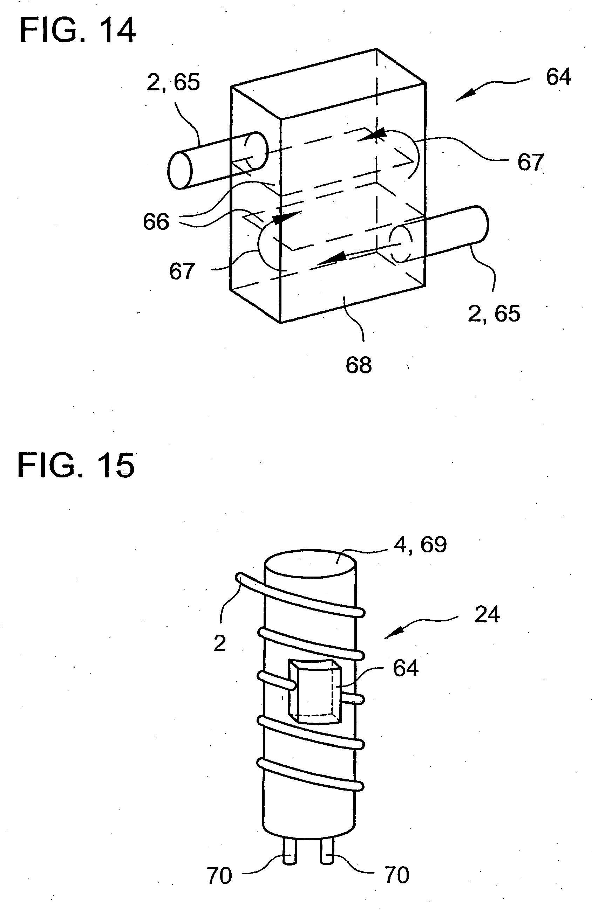

Die Verdampfereinheit 12 weist Mittel 64 zum Abscheiden von Tropfen auf, die beispielsweise innerhalb der Zugabeleitung 2 oder in oder nach der zweiten Öffnung 26 der Verdampferkammer 24 ausgebildet sein können. Fig. 14 zeigt ein Ausführungsbeispiel eines solchen Mittels 64 zum Abscheiden von Tropfen. Dieses Mittel 64 ist mit der Zugabeleitung 2 oder allgemein einer Leitung 65 verbunden, durch die Dampf tritt. Sollten noch Tropfen in dem Dampf vorhanden sein, werden diese im vorliegenden Beispiel durch Trägheitswirkung abgeschieden. In dem Mittel 64 sind eine oder mehrere Prallplatten 66 ausgebildet, die den Strom zu Umlenkungen 67 zwingen. Prallplatte 66 und/oder das Gehäuse 68 des Mittels 64 sind beheizt, so dass abgeschiedene Tropfen ebenfalls verdampft werden. Statt dem hier gezeigten Mittel 64 zum Abscheiden von Tropfen können andere Maßnahmen alternativ oder kumulativ getroffen werden, beispielsweise kann die Zugabeleitung 2 oder die Leitung 65 bereichsweise verengte Querschnitte, Vorsprünge, Umlenkungen oder ähnliches aufweisen.

Fig. 15 zeigt schematisch ein weiteres Ausführungsbeispiel einer Verdampfereinheit 12, bei der eine Zugabeleitung 2 durch Mittel 4 zum Beheizen der Zugabeleitung 2 beheizbar sind. Die Mittel 4 zum Beheizen der Zugabeleitung 2 umfassen. hier ein stabförmiges Heizelement 69, welches über elektrische Anschlüsse 70 mit einer Stromquelle verbindbar ist. In der Zugabeleitung 2 ist ein Mittel 64 zum Abscheiden von Tropfen ausgebildet, welches über den Kontakt zu dem stabförmigen Heizelement 69 beheizbar ist.

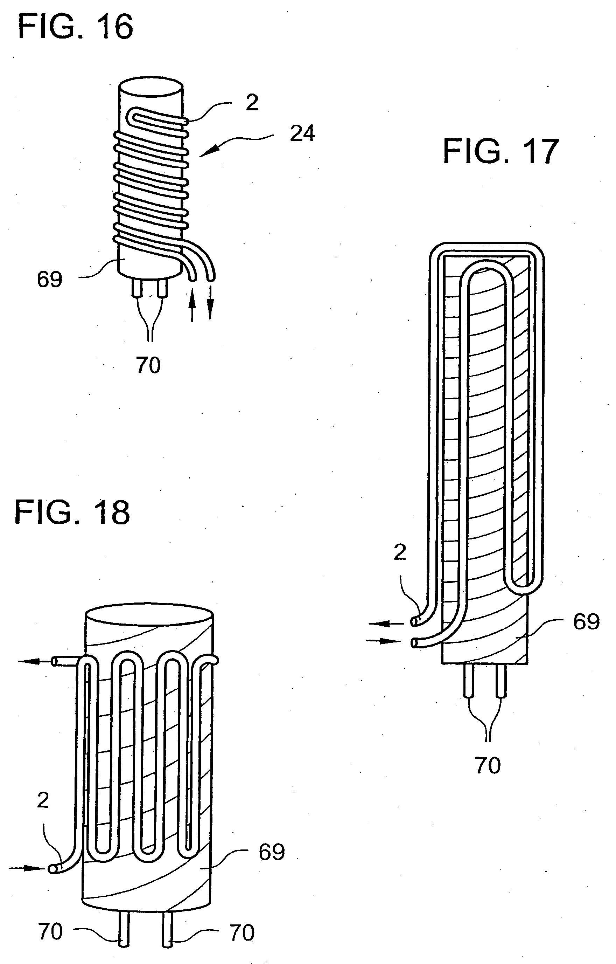

Fig. 16 zeigt schematisch ein weiteres Ausführungsbeispiel einer Verdampfereinheit 12, bei der die Zugabeleitung 2 in Form einer Schlaufe zweimal um das stabförmige Heizelement 69 gewickelt ist.

Fig. 17 und 18 zeigen Ausführungsbeispiele von Verdampfereinheiten 12, bei denen die Zugabeleitung 2 nicht um die Längsachse des stabförmigen Heizelementes 69 gewickelt ist sondern in Schlaufen an dem stabförmigen Heizelement 69 befestigt ist. Grundsätzlich ist eine stoffschlüssige Verbindung zwischen Zugabeleitung 2 und stabförmigem Heizelement 69 bevorzugt, insbesondere eine Hartlötverbindung ("brazed connection").

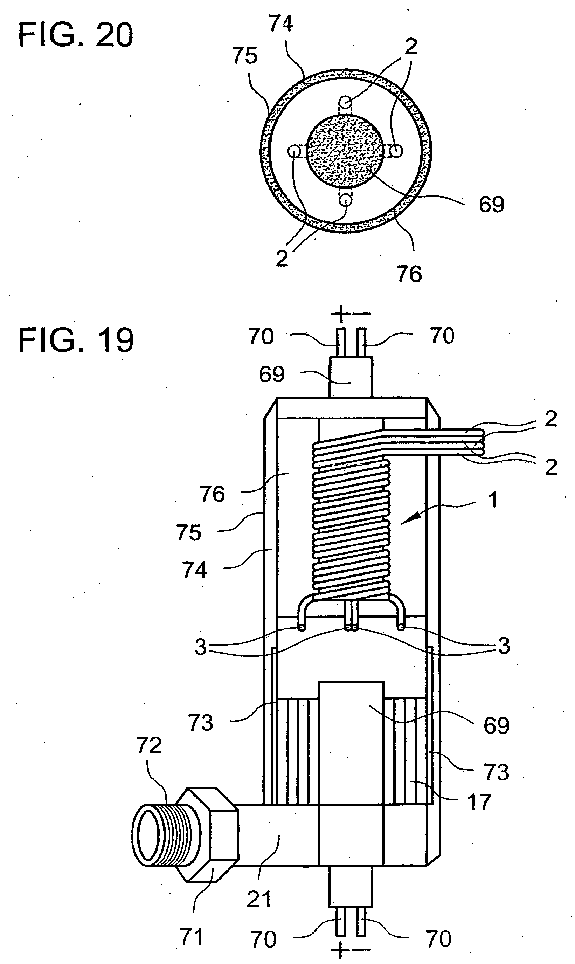

Fig. 19 und 20 zeigen schematisch ein weiteres Ausführungsbeispiel einer Vorrichtung 1 zum Bereitstellen eines gasförmigen Stoffgemisches umfassend mindestens einen der folgenden Stoffe: a) ein Reduktionsmittel, bevorzugt Ammoniak, und b) mindestens einen Reduktionsmittelvorläufer, insbesondere Harnstoff mit einem Hydrolysekatalysator 17. Die Vorrichtung 1 umfasst mindestens einen Zugabeleitung 2, im vorliegenden Ausführungsbeispiel vier Zugabeleitungen 2, die spiralförmig um ein stabförmiges Heizelement 69 gewickelt sind. Jede der Zugabeleitungen 2 weist jeweils eine Abgabeöffnung 3 auf, durch die im Betrieb ein gasförmiges Stoffgemisch abgegeben wird, welches ein Reduktionsmittel umfasst. Die Abgabeöffnungen 3 sind jeweils so verteilt, dass sie auf einem Kreis im Wesentlichen gleich verteilt sind. Die Zugabeleitungen 2 sind mit einem hier nicht gezeigten Reservoir 20 verbunden, aus welchem mittels einem Fördermittel 19 eine wässrige Lösung 45 mindestens eines Reduktionsmittelvorläufers in die Zugabeleitung 2 gefördert wird. Zugabeleitungen 2 und Heizelement 69 sind Teil eines entsprechenden Reduktionsmittellösungsverdampfers 16.

Stromabwärts der Abgabeöffnungen 3 ist ein Hydrolysekatalysator 17 ausgebildet, der ebenfalls von einem stabförmigen Heizelement 69 beheizt werden kann. In einer vorteilhaften Weiterbildung ist nur ein stabförmiges Heizelement 69 ausgebildet, welches sowohl mit der oder den Zugabeleitungen 2 als auch mit dem Hydrolysekatalysator 17 in wärmetechnischem Kontakt steht. Der Hydrolysekatlysator 17 ist im vorliegenden Ausführungsbeispiel als ringförmiger Wabenkörper ausgeführt. Stromabwärts des Hydrolysekatalysators 17 schließt sich eine Dosierleitung 21 an, über die im Betrieb der Gasstrom umfassend mindestens ein Reduktionsmittel in die Abgasleitung 14 geführt werden kann. Über die Verbindungsmittel 71 ist eine mechanische Verbindung zur Abgasleitung 14 herstellbar. Weiterhin ist eine thermische Isolierung 72 ausgebildet, mittels der der Hydrolysekatalysator 17 thermisch von der Abgasleitung 14 abgekoppelt wird. Weiterhin ist ein Wärmeschild 73 ausgebildet, mittels dem der Hydrolysekatalysator 17 vor einer Abstrahlung von Wärme geschützt wird. Weiterhin ist eine Lufstpaltisolierung 74 zwischen einem Außengehäuse 75 und einem Innengehäuse 76 ausgebildet, die ebenfalls der thermischen Isolierung dient.

Fig. 20 zeigt einen Querschnitt durch im Bereich der Zugabeleitungen 2, die rings um das stabförmige Heizelement 69 zu erkennen sind.

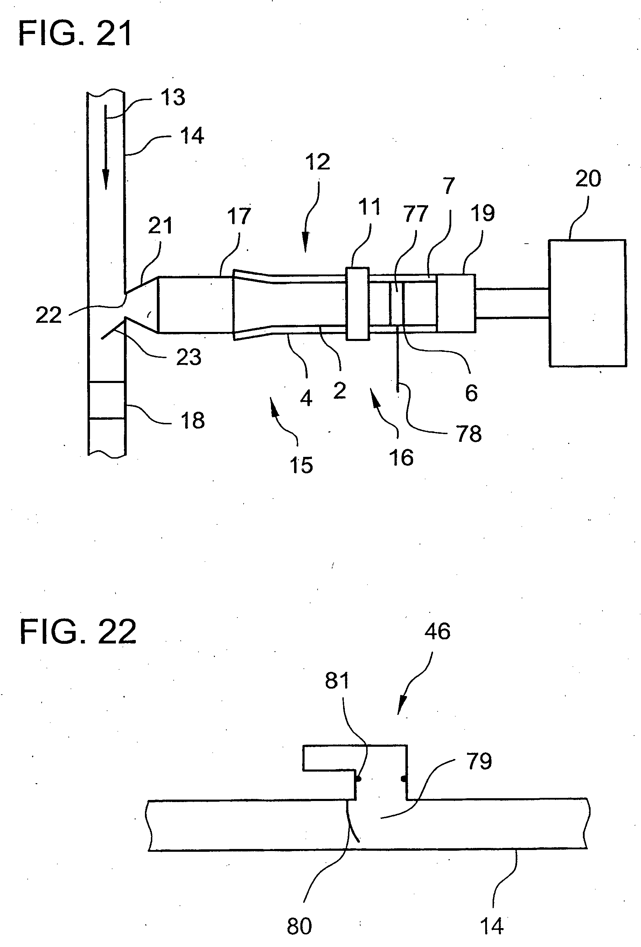

Fig. 21 zeigt schematisch ein weiteres Ausführungsbeispiel einer Vorrichtung 15 zur Aufbereitung von Abgas 13. Im Unterschied zu der Ausführungsform in Fig. 4 ist in der Förderleitung 6 ein Ventil 77 ausgebildet, welches zum Dosieren der wässrigen Lösung 45 in die Verdampfereinheit 12 dient. Das Ventil 77 ist über einen Steueranschluss 78 ansteuerbar.

Fig. 22 zeigt schematisch einen Mündungsbereich 79 einer Zugabeeinheit 46 in die Abgasleitung 14. Die Abgasleitung 14 und/oder die Zugabeeinheit weist hier eine Blende 80 auf, die im Betrieb im Mündungsbereich 79 eine Tot- oder Beruhigungszone der Abgasströmung und mithin einen Bereich mit verringertem Druck schafft und somit dafür sorgt, dass kein Abgas in die Zugabeeinheit 46 gedrückt wird. Die Zugabeeinheit 46 weist weiterhin einen Temperatursensor 81 auf, der einen ringförmig ausgebildeten Thermowiderstand umfasst Sollten sich in diesem Bereich Ablagerungen bilden, so kann der Temperatursensor 81 mit einer Stromquelle (nicht gezeigt) verbunden werden, um so durch Erhöhung der Temperatur auf eine zweite Solltemperatur, beispielsweise von 550°C oder mehr, bevorzugt von 600°C oder mehr eine Auflösung oder Verringerung der Ablagerungen bewirken.

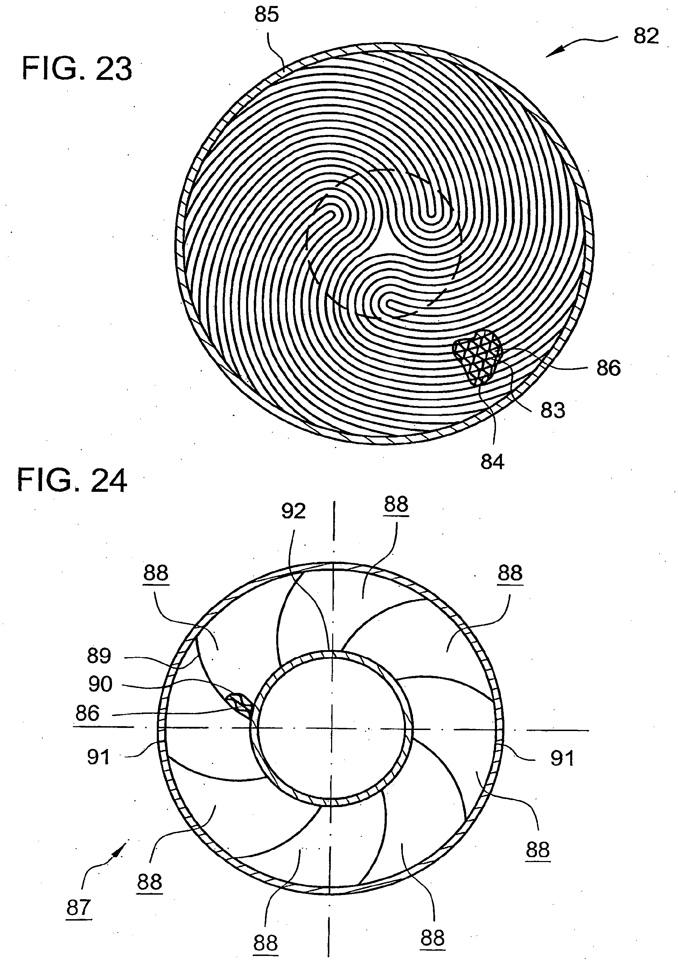

Fig. 23 zeigt schematisch einen Querschnitt eines Wabenkörpers 82, der sowohl als Hydrolysekatalysator 17 als auch als SCR-Katalysator 18 eingesetzt werden kann, wobei hierbei andere katalytisch aktive Beschichtungen aufgetragen werden müssen. Der Wabenkörper 82 ist aus glatten metallischen Lagen 83 und gewellten metallischen Lagen 84 aufgebaut, die in diesem Ausführungsbeispiel zu drei Stapeln geschichtet und dann miteinander verwunden wurden. Der Wabenkörper 82 umfasst ferner ein Mantelrohr 85, welches den Wabenkörper 82 nach außen abschließt. Glatte 83 und gewellte Lagen 84 bilden Kanäle 86, die für Abgas 13 durchströmbar sind.

Fig. 24 zeigt ein weiteres Beispiel eines Wabenkörpers 87, der ringförmig ausgebildet ist und sowohl als Hydrolysekatalysator 17 als auch als SCR-Katalysator 18 einsetzbar ist, wobei hierbei andere katalytisch aktive Beschichtungen aufgetragen werden müssen. Der Wabenkörper 87 ist aus Lagen 88 ausgebildet, die glatte 89 und gewellte Abschnitte 90 aufweisen, die aufeinander gefalten sind und Kanäle 86 bilden, die für Abgas 13 durchströmbar sind Der Wabenkörper 87 ist durch ein äußeres Mantelrohr 91 und ein inneres Mantelrohr 92 abgeschlossen.

Insbesondere bei einer durch Mittel 4, 69 beheizten Zugabeleitung 2 ist es grundsätzlich vorteilhaft, neben einer einseitigen Beheizung auch eine Beheizung von der anderen Seite vorzusehen. So können weitere hülsenförmige Heizelemente ausgebildet sein, die von außen die Zugabeleitung umschließen. Grundsätzlich ist es vorteilhaft, wenn an einem bestimmten Querschnitt der Zugabeleitung 2 sich im Betrieb sich die Temperatur über den Umfang höchstens um +25°C oder -25°C von einer mittleren Temperatur unterscheidet.

Als Hydrolysekatalysator 17 ist grundsätzlich auch ein mit einer die Hydrolyse insbesondere von Harnstoff zu Ammoniak katalysierenden Beschichtung versehenes Rohr oder aber ein Mantelrohr mit mindestens einer innen am Außenumfang angebrachten strukturierten metallischen Lage, die bevorzugt einen frei durchströmbaren Querschnitt radial in ihrem Inneren aufweist, der mindestens 20% des Gesamtquerschnitts des Mantelrohrs beträgt. Diese Ausführungsformen werden bevorzugt von außen beheizt.

Grundsätzlich wird vor dem Beginn der Bereitstellung von Reduktionsmittel vor dem SCR-Katalysator 18 bevorzugt wie folgt verfahren:
- Zunächst wird geprüft, ob eine Stromversorgung oder Brennstoffversorgung für die vorhandenen Temperier- und/oder Aufheizmittel 4, 27, 31, 49, 50, 63, 69 gesichert ist;
- wenn festgestellt wird, dass die Strom- und/oder Brennstoffversorgung gesichert ist, dann wird die Verdampfereinheit 12 und gegebenenfalls der Hydrolysekatalysator 17 auf jeweils eine vorbestimmte Solltemperatur aufgeheizt, insbesondere eine Zugabeleitung 2 auf etwa 400 bis 450°C und/oder eine Verdampferkammer 24 auf etwa 350 bis 450°C; parallel wird wässrige Lösung 45 bis zur Verdampfereinheit 24, insbesondere bis zur Verbindungseinheit 11 gefördert, wobei einerseits ein Volumen an wässriger Lösung 45 gefördert werden kann, welches im Wesentlichen dem Volumen der Förderleitung 6 entspricht und andererseits an entsprechender Stelle, beispielsweise an, in oder benachbart zur Verbindungseinheit 11 ein entsprechender Sensor, beispielsweise basierend auf einer Leitfähigkeitsmessung, ausgebildet werden kann;
- dann wird die Temperatur des SCR-Katalysators 18 bzw. der Abgasleitung 14 bestimmt, insbesondere gemessen und/oder aus den Daten einer Motorsteuerung berechnet.

Liegt die Temperatur des SCR-Katalysators 18 über einem vorgebbaren Grenzwert, der insbesondere der Starttemperatur ("light off"-Temperatur) des SCR-Katalysators 18 liegt, wird die Verdampfereinheit 12 mit der wässrigen Lösung 45 beschickt. Haben die Verdampfungseinheit 12, die Zugabeleitung 2 und/oder die Verdampferkammer 24 noch im wesentlichen ihre Betriebstemperatur, so können die oben angegebenen Diagnoseschritte unterbleiben.

Im Betrieb wird die in die Verdampfereinheit 12 eingebrachte Heizleistung mit der Fördermenge an wässriger Lösung 45 korreliert. Insbesondere bedeutet dies, dass geprüft wird, was für eine Soll-Heizleistung für die Verdampfung der jeweiligen Fördermenge benötigt wird. Liegt die gemessene Ist-Heizleistung für eine Zeitspanne unterhalb der Soll-Heizleistung, so wird eine Warnung an den Benutzer ausgegeben, da dann eine Reduzierung des Querschnitts der Zugabeleitung 2 und/oder der Dosierleitung 21 vorliegen kann.

Weiterhin ist es vorteilhaft, in regelmäßigen, vorgebbaren Zeitabständen die Verdampfereinheit 12, die Zugabeleitung 2, die Verdampferkammer 24, den Hydrolysekatalysator 17, die Dosierleitung 21 und/oder die Zugabeeinheit 46 auf eine Temperatur aufzuheizen, die über der normalen Betriebstemperatur liegt, um so gegebenenfalls vorhandene Ablagerungen aufzulösen.

Beim Beenden der Verdampfung, die beispielsweise dann erfolgt, wenn die Verbrennungskraftmaschine abgestellt wird, kann eine Rückförderung der wässrigen Lösung 45 aus der Zugabeleitung 2 erfolgen. Bevorzugt wird vor Rückförde-. rung aus der Zugabeleitwig 2 zunächst die Förderung von wässriger Lösung 45 eingestellt werden, wobei jedoch weiterhin die Verdampfereinheit 12, die Zugabeleitung 2 und/oder die Verdampferkammer 24 auf übliche Temperatur beheizt wird, um so eine vollständige Verdampfung durchzuführen und so zu verhindern, dass bei der Rückförderung auch eventuelle Verunreinigungen in der Verdampfereinheit 12, der Zugabeleitung 2 und/oder der Verdampferkammer 24 in die Förderleitung 6 gelangen. Nach Verstreichen einer gewissen Zeit kann dann die Rückförderung durch die Fördermittel 19 initiiert werden. Vorteilhafter Weise ist an der Verbindungseinheit 11 oder benachbart zu dieser ein Ventil ausgebildet, mittels welchem Luft bei der Rückförderung ansaugbar. ist. Grundsätzlich wird rückgefördert, bis die Förderleitung 6 im Wesentlichen in das Reservoir 20 entleert ist.

Bei starken Änderungen der Fördermenge, der zu fördernden wässrigen Lösung 45, die beispielsweise auf einer stark ansteigenden Konzentration von Stickoxiden im Abgas der Verbrennungskraftmaschine zurückzuführen sein kann können Situationen eintreten, dass die Verdampfungseinheit 12 nicht in der Lage ist, plötzlich eine deutlich größere Menge an wässriger Lösung 45 zu verdampfen, da die entsprechend erhöhte Aufheizung nicht so schnell erfolgen kann. In diesem Falle ist es bevorzugt, die Fördermenge an wässriger Lösung 45 nur so zu erhöhen, dass gerade noch eine vollständige Verdampfung möglich ist.

Die Menge an zuzugebendem Reduktionsmittel und folglich auch die Menge an zu verdampfender wässriger Lösung 45 kann in Abhängigkeit beispielsweise von mindestens einer der folgenden Bedingungen bestimmt werden:
a) der Stickoxidkonzentration im Abgas;
b) einer prognostizierten Stickoxidgeneration, die bevorzugt dann vorliegt, wenn das Abgas den SCR-Katalysator 18 passiert;
c) der maximalen Menge an Reduktionsmittel, die gerade vom SCR-Katalysator 18 umgesetzt werden kann.

Reservoir 20, Förderleitung 6, Verdampfereinheit 12, Zugabeleitung 2, Verdampferkammer 24 und/oder Hydrolysekatalysator 17 können in thermischem Kontakt beispielsweise zum Kraftstofftank der Verbrennungskraftmaschine ausgebildet sein. Dieser weist üblicherweise aus Frostschutzgründen eine Heizung auf, die dann auch Frostschutz für die oben angegebenen Bauteile bieten kann.

Weiterhin wird eine Vorrichtung 15 zur Aufbereitung des Abgases einer Verbrennungskraftmaschine beschrieben. Diese umfasst zumindest einen Reduktionsmittellösungsverdampfer 16, einen mit dem Reduktionsmittellösungsverdampfer 16 verbundenen Hydrolysekatalysator 17 zur Hydrolyse von insbesondere Harnstoff zu Ammoniak und einen SCR-Katalysator 18 zur selektiven katalytischen Reduktion von Stickoxiden (NOₓ). Der Reduktionsmittellösungsverdampfer 16 umfasst eine Verdampfereinheit 12 zum Bereitstellen eines gasförmigen Stoffgemisches umfassend mindestens einen der folgenden Stoffe:
a) mindestens einen Reduktionsmittelvorläufer und
b) ein Reduktionsmittel.

Mit der Verdampfereinheit 12 ist eine wässrige Lösung 45 umfassend mindestens einen Reduktionsmittelvorläufer verdampfbar. Der SCR-Katalysator 18 ist in der Abgasleitung 14 ausgebildet, wobei der Reduktionsmittellösungsverdampfer 16 und der Hydrolysekatalysator 17 außerhalb der Abgasleitung 14 und mit dieser verbindbar ausgebildet sind.

Diese Vorrichtung 15 kann in vorteilhafter Weise weitergebildet werden, indem eine Förderleitung 6 zur Verbindung der Verdampfereinheit 12 mit einem Reservoir 20 für die wässrige Lösung 45 verbunden ist. Hierbei sind Förderleitung 6 und Verdampfereinheit 12 durch eine Verbindungseinheit 11 miteinander verbunden. Diese Verbindungseinheit 11 ist zumindest teilweise aus einem Material mit einer Wärmeleitfähigkeit von weniger als 10 W/m K (Watt pro Meter und Kelvin), bevorzugt von weniger als 2 W/m K, besonders bevorzugt von weniger als 1 W/m K, insbesondere von 0,2 W/m K. Weiterhin ist es vorteilhaft, dass die Verbindungseinheit 11 aus mindestens einem Werkstoff ausgebildet ist, der aus mindestens einem der folgenden Materialien aufgebaut ist:
a) ein keramischer Werkstoff
b) Polytetrafluorethylen (PTFE).

Weiterhin ist es vorteilhaft, dass die Verbindungseinheit 11 so aufgebaut ist, dass über eine Länge der Verbindungseinheit 11 ein Temperaturgradient von 40 K/mm (Kelvin pro Millimeter) und mehr aufrechterhalten werden kann. Weiterhin weist der Hydrolysekatalysator 17 eine Wärmekapazität von höchstens 60 J!K (Joule pro Kelvin) auf. Das Volumen des Hydrolysekatalysators 17 liegt bei 100 ml und weniger.

Der Hydrolysekatalysator umfasst bevorzugt ein Mantelrohr, wobei das Mantelrohr bei der Bestimmung der oben angegebenen Wärmekapazität nicht berücksichtigt wird. In dem Mantelrohr ist bevorzugt mindestens eine zumindest teilweise strukturierte metallische Lage ausgebildet. Bevorzugt ist im inneren Bereich ein freier Bereich ohne Ausbildung von zumindest teilweise strukturierten Lagen vorgesehen, der mindestens 20 oder sogar 50 Flächen-% der Querschnittsfläche des Mantelrohres umfasst.

Der Hydrolysekatalysator 17 hat vorteilhafter Weise eine Zelldichte von weniger als 600 cpsi (cells per squareinch), bevorzugt von 400 cpsi und weniger, besonders bevorzugt von 300, 200 oder 100 cpsi und weniger. Bevorzugt ist der Hydrolysekatalysator 17 mechanisch mit der Abgasleitung 14 verbunden. Bevorzugt ist der Hydrolysekatalysator 17 thermisch von der Abgasleitung 14 entkoppelt.

Gemäß einer weiteren vorteilhaften Ausgestaltung dieser Vorrichtung 15 ist mindestens ein stabförmiges Heizelement 69 ausgebildet, mit welchem mindestens eines der folgenden Bauteile beheizbar ist:
a) der Hydrolysekatalysator 17 und
b) zumindest Teile der Verdampferkammer 24.

Weiterhin ist es vorteilhaft, dass mindestens eines der folgenden Bauteile temperierbar ist:
a) zumindest Teile der Förderleitung 6;
b) der Hydrolysekatalysator 17;
c) zumindest Teile der Verdampfereinheit 12;
d) eine Dosierleitung 21 zur Zugabe des entstehenden Ammoniaks zum Abgassystem; und
e) eine Zugabeeinheit 46, mit der der Hydrolysekatalysator 17 mit der Abgasleitung 14 verbindbar ist.

Weiterhin ist es vorteilhaft, dass Mittel 4, 7, 27, 31, 49, 50 zum Temperieren ausgebildet sind, die mindestens eines der folgenden Bauteile umfassen:
a) einen Heizdraht;
b) ein Peltier-Element 8;
c) einen Kühlkörper 9;
d) ein stabförmiges Heizelement 69 und
e) ein Mittel 63 zum Verbrennen eines Kraftstoffes.

Weiterhin ist es vorteilhaft, dass mindestens eines der folgenden Bauteile eine die Hydrolyse von Harnstoff katalysierende Beschichtung aufweist:
a) zumindest Teile der Verbindungseinheit 11;
b) zumindest Teile einer Zugabeleitung 2 zur Zugabe des gasförmigen Stoffgemisches zum Hydrolysekatalysator 17;
c) zumindest Teile der Verdampfereinheit 12;
d) zumindest Teile einer Dosierleitung 21 zur Zugabe des entstehenden Reduktionsmittels zum Abgassystem, und
e) zumindest Teile einer Zugabeeinheit 46, mit der der Hydrolysekatalysator 17 mit der Abgasleitung 14 verbindbar ist.

Weiterhin ist es vorteilhaft, dass eine Zugabeeinheit 46 ausgebildet ist, mittels der der Hydrolysekatalysator 17 in strömungstechnische Verbindung mit einer Abgasleitung 14 der Verbrennungskraftmaschine bringbar ist. Insbesondere umfasst die Zugabeeinheit 46 ein passives Vermischungsmittel, mit welchem die einbringbaren Stoffe mit dem Abgas mischbar sind. Das Vermischungsmittel umfasst bevorzugt mindestens eines der folgenden Bauteile:
a) ein Leitblech 34 und
b) einen Wabenkörper 52, der so ausgestaltet ist, dass das Abgas 13 diesen zumindest zum Teil in einem Winkel zur Hauptströmungsrichtung 45 des Abgases durchströmen kann.

Vorteilhafter Weise weist der Wabenkörper 52 für ein Fluid durchströmbare Kanäle und Durchbrechungen auf, die benachbarte Kanäle miteinander verbinden.

In einer vorteilhaften Weiterbildung dieser Vorrichtung 15 ist mindestens eines der folgenden Bauteile:
a) die Zugabeeinheit 46 und
b) die Abgasleitung 14

so ausgebildet, dass im Betrieb der Mündungsbereich der Zugabeeinheit 46 in die Abgasleitung 14 einer strömungstechnisch Beruhigungs- oder Totzone bildet.

Gemäß einer weiteren vorteilhaften Ausgestaltung dieser Vorrichtung 15 ist stromabwärts des Hydrolysekatalysators 17 eine thermische Isolierung 72 ausgebildet. Diese thermische Isolierung 72 ist bevorzugt unmittelbar anschließend an dem Hydrolysekatalysator 17 ausgebildet.

Gemäß einer weiteren vorteilhaften Ausgestaltung dieser Vorrichtung 15 umfasst mindestens eines der folgenden Bauteile mindestens einen Temperatursensor:
a) die Zugabeeinheit 46;
b) der Hydrolysekatalysator 17;
c) der SCR-Katalysator 18;
d) die Verdampfereinheit 12;
e) die Zugabeleitung 2;
f) die Verdampferkammer 24 und
g) eine Dosierleitung 21 zur Zugabe des entstehenden Reduktionsmittels zur Abgasleitung 14.

Bevorzugt ist dieser Temperatursensor mit einer Stromversorgung verbindbar, so dass er auch zum Aufheizen des entsprechenden Bauteils a) bis g) Einsatz finden kann.

Gemäß einer weiteren vorteilhaften Ausgestaltung dieser Vorrichtung 15 ist ein Fördermittel 19 ausgebildet, mittels welchem die wässrige Lösung 45 aus einem Reservoir zu der Verdampfereinheit 24 förderbar ist. Das Fördermittel 19 umfasst bevorzugt mindestens eine Pumpe, bevorzugt eine Dosierpumpe. Gemäß einer vorteilhaften Ausgestaltung kann die Pumpe einen Förderdruck aufbauen, der größer als der höchstmögliche Abgasdruck im Betrieb der Verbrennungskraftmaschine an der Zugabeeinheit 46 und/oder der Dosierleitung 21 ist. Gemäß einer weiteren vorteilhaften Ausgestaltung der Vorrichtung 15 ist zwischen Fördermittel 19 und Verdampfereinheit 12 mindestens ein Ventil zum Dosieren der wässrigen Lösung 45 ausgebildet.

Weiterhin soll hier ein vorteilhaftes Verfahren zur Aufbereitung des Abgases einer Verbrennungskraftmaschine beschrieben werden. Das Verfahren umfasst zumindest die folgenden Schritte:
a) Bereitstellen mindestens eines der folgenden Stoffe:
   a1) Reduktionsmittel
   a2) mindestens einen Reduktionsmittelvorläufer umfassendes gasförmiges Stoffgemisch
b) Hydrolyse des mindestens einen Reduktionsmittelvorläufers, wobei ein Reduktionsmittelstoffgemisch 35 erhalten wird;
c) Beaufschlagen eines SCR-Katalysators 18 mit dem Reduktionsmittelstoffgemisch 35 und dem Abgas 14 zur mindestens teilweisen selektiven katalytischen Reduktion von im Abgas umfassten Stickoxiden (NOₓ).

Nach Schritt b) erfolgt eine Mischung des Reduktionsmittelstoffgemisches 35 mit zumindest Teilen des Abgases 14.

Vorteilhaft kann dieses Verfahren dadurch weitergebildet werden, dass in Schritt a) eine Verdampfung einer wässrigen Lösung 45 umfassend mindestens einen Reduktionsmittelvorläufer in einer Verdampfereinheit 12 erfolgt. Weiterhin ist es bevorzugt, dass Schritt b) zumindest teilweise in einem Hydrolysekatalysator 17 erfolgt.

Gemäß einer vorteilhaften Ausgestaltung dieses Verfahrens wird die Temperatur mindestens eines der folgenden Bauteile geregelt:
a) zumindest von Teilen der Verdampfereinheit 12;
b) des Hydrolysekatalysators 17;
c) einer Förderleitung 6 zum Fördern der wässrigen Lösung 45 zu der Verdampfereinheit 12;
d) eine Zugabeleitung 2 zur Zugabe des gasförmigen Stoffgemisches zum Hydrolysekatalysator 17;
e) eine Dosierleitung 21 zur Zugabe des entstehenden Reduktionsmittels zum Abgassystem; und
f) eine Zugabeeinheit 46, mittels der der Hydrolysekatalysator 17 in strömungstechnische Verbindung mit einer Abgasleitung 14 der Verbrennungskraftmaschine bringbar ist.

Hierbei wird diese Verbindung stromaufwärts des SCR-Katalysators 18 ausgebildet. Weiterhin ist es vorteilhaft, dass mindestens eines der folgenden Bauteile temperiert wird:
a) zumindest Teile der Verdampfereinheit 12;
b) der Hydrolysekatalysator 17;
c) eine Förderleitung 6 zum Fördern der wässrigen Lösung 45 zu einer Verdampfereinheit 12;
d) eine Zugabeleitung 2 zur Zugabe des gasförmigen Stoffgemisches zum Hydrolysekatalysator 17;
e) eine Dosierleitung 21 zur Zugabe des entstehenden Reduktionsmittels zum Abgassystem und
f) eine Zugabeeinheit 46, mittels der der Hydrolysekatalysator 17 in strömungstechnische Verbindung mit einer Abgasleitung 14 der Verbrennungskraftmaschine bringbar ist.

Eine weitere Ausgestaltung dieses Verfahrens umfasst die Förderung der wässrigen Lösung 45 durch eine Förderleitung 6 zum Reduktionsmittellösungsverdampfer 16. Hierbei ist es vorteilhaft, wenn die wässrige Lösung 45 durch die Förderleitung 6 rückförderbar ist. Gemäß einer weiteren vorteilhaften Ausgestaltung dieses Verfahrens werden bis zu 2,5 ml der wässrigen Lösung 45 binnen einer Sekunde verdampft.

Gemäß einer weiteren vorteilhaften Ausgestaltung dieses Verfahrens wird vor Beginn einer Temperierungsmaßnahme die Temperatur an mindestens einem der folgenden Bauteile:
a) dem Hydrolysekatalysator 17;
b) der Verdampfereinheit 12;
c) einer Dosierleitung 21 zur Zugabe des entstehenden Reduktionsmittels zur Abgasleitung 14; und
d) einer Zugabeeinheit 46, mittels der der Hydrolysekatalysator 17 in strömungstechnische Verbindung mit einer Abgasleitung 14 der Verbrennungskraftmaschine bringbar ist
bestimmt und mit mindestens einer weiteren Temperatur eines anderen Bauteils abgeglichen. Gemäß einer Weiteren vorteilhaften Ausgestaltung dieses Verfahrens wird die Verdampfung der wässrigen Lösung 45 nur durchgeführt, wenn der Temperaturabgleich ergibt, dass die bestimmte Temperatur und die Temperatur des anderen Bauteils sich höchstens um einen vorgebbaren Differenzwert unterscheiden.

Gemäß einem weiteren vorteilhaften Aspekt wird eine Vorrichtung 1 zum Bereitstellen eines gasförmigen Stoffgemisches umfassend mindestens einen der vorliegenden Stoffe:
a) mindestens ein Reduktionsmittel und
b) mindestens einen Reduktionsmittelvorläufer vorgeschlagen.

Hierbei umfasst die Vorrichtung 1 ein Reservoir 20 für eine wässrige Lösung 45 umfassend mindestens einen Reduktionsmittelvorläufer. Aus dem Reservoir 20 ist die wässrige Lösung 45 mittels eines Fördermittels 19 in mindestens eine Zugabeleitung 2 mit Abgabeöffnung 3 förderbar. Vorteilhaft sind Mittel 4 zur Aufheizung der Zugabeleitung 2 ausgebildet, mit denen die mindestens eine Zugabeleitung 2 über eine kritische Temperatur aufheizbar ist, die größer als die Siedetemperatur von Wasser ist. Bevorzugt liegt diese Temperatur bei 350°C oder mehr, bevorzugt bei 400°C oder mehr, insbesondere bei 410 bis 430°C. Eine vorteilhafte Weiterbildung dieser Vorrichtung 1 sieht vor, dass das Fördermittel 19 mindestens eine Pumpe umfasst. Bevorzugt handelt es sich hierbei um eine Dosierpumpe. Gemäß einer weiteren vorteilhaften Weiterbildung dieser Vorrichtung ist ein Ventil zur Dosierung der Menge der wässrigen Lösung 45 zwischen Fördermittel 19 und Zugabeleitung 2 ausgebildet. Weiterhin vorteilhaft umfassen die Mittel 4 zur Aufheizung mindestens eines der folgenden Elemente:
a) eine elektrische Widerstandsheizung;
b) Wärmeübertragungsmittel zur Nutzung der Abwärme mindestens eines anderen Bauteils;
c) mindestens ein Peltier-Element und
d) ein Mittel zur Verbrennung eines Kraftstoffes.

Eine weitere vorteilhafte Weiterbildung dieser Vorrichtung zeichnet sich dadurch aus, dass die Vorrichtung 1 so ausgebildet ist, dass im Betrieb die Temperatur über die Länge der Zugabeleitung 2 höchstens 25°C oberhalb und unterhalb einer mittleren Temperatur liegt.

Eine weitere vorteilhafte Ausgestaltung dieser Vorrichtung zeichnet sich dadurch aus, dass die Zugabeleitung 2 einen durchströmbaren Querschnitt von höchstens 20 mm² aufweist. Weiterhin vorteilhaft ist es, dass die Zugabeleitung 2 aus einem Material umfassend mindestens einen der folgenden Werkstoffe ausgebildet ist:
a) Kupfer;
b) Aluminium;
c) Nickelbasiswerkstoff;
d) Chrom-Nickel-Stahl und
e) Edelstahl.

Die Zugabeleitung 2 weist insbesondere eine Länge von 0,1 bis 5 m, bevorzugt eine Länge von 0,3. bis 0,7 m, besonders bevorzugt im Wesentlichen 0,5 m auf. Die Zugabeleitung 2 weist bevorzugt eine Wandstärke von 0,1 bis 0,5 mm auf. Die Zugabeleitung 2 weist bevorzugt eine Wärmekapazität von mindestens 150 J/K (Joule pro Kelvin) auf.

Gemäß einer vorteilhaften Ausgestaltung dieser Vorrichtung 1 haben die Zugabeleitung 2 und die Mittel 4 zur Aufheizung der Zugabeleitung 2 zumindest in mindestens einem Teilbereich mindestens eine der folgenden Anordnungen zueinander:
a) Zugabeleitung 2 und Mittel 4 zur Aufheizung der Zugabeleitung 2 sind zumindest in einem Teilbereich koaxial zueinander ausgebildet;
b) Zugabeleitung 2 und Mittel 4 zur Aufheizung der Zugabeleitung 2 sind zumindest in einem Teilbereich konzentrisch zueinander ausgebildet;
c) Zugabeleitung 2 und Mittel 4 zur Aufheizung der Zugabeleitung 2 sind zumindest in einem Teilbereich nebeneinander angeordnet;
d) die Zugabeleitung 2 ist zumindest in einem Teilbereich um das Mittel 4 zur Aufheizung der Zugabeleitung 2 herum gewunden ausgebildet;
e) das Mittel 4 zur Aufheizung der Zugabeleitung 2 stellt zumindest in Teilbereichen ein stabförmiges Heizelement 69 dar, um das die Zugabeleitung 2 herum gewunden ausgebildet ist und
f) die Zugabeleitung 2 bildet einen Kanal in einem stabförmigen Heizelement 69.

Gemäß einer weiteren vorteilhaften Ausgestaltung der Vorrichtung 1 sind die Zugabeleitung 2 und das Mittel 4 zur Aufheizung der Zugabeleitung 2 zumindest in Teilbereichen stoffschlüssig miteinander verbunden. Unter einer stoffschlüssigen Verbindung wird insbesondere eine Löt- und/oder Schweißverbindung verstanden.

Gemäß einer weiteren vorteilhaften Ausgestaltung der Vorrichtung 1 ist die Zugabeleitung 2 zumindest teilweise mit einer die Hydrolyse eines Reduktionsmittelvorläufers zu einem Reduktionsmittel katalysierenden Beschichtung versehen. Bevorzugt umfasst die Vorrichtung 1 mindestens einen Messfühler 5 zur Bestimmung der Temperatur der Zugabeleitung 2. Bevorzugt ist dieser Messfühler mit einer Stromquelle 5 verbindbar, um so beispielsweise im Rahmen eines Notfallprogramms eine Aufheizung der Zugabeleitung 2 über die kritische Temperatur hinaus ermöglicht.

Weiterhin wird ein vorteilhaftes Verfahren zum Bereitstellen eines gasförmigen Stoffgemisches umfassend mindestens einen der folgenden Stoffe:
a) mindestens ein Reduktionsmittel und
b) mindestens einen Reduktionsmittelvorläufer
beschrieben. Hierbei wird eine wässrige Lösung 45 mindestens eines Reduktionsmittelvorläufers aus einem Reservoir 20 in eine Zugabeleitung 2 gefördert. Die Zugabeleitung 2 wird dabei so beheizt, dass die wässrige Lösung 45 vollständig zu dem gasförmigen Stoffgemisch verdampft. Unter vollständig wird hierbei insbesondere eine Verdampfung verstanden, bei der 90 Gewichts-% und mehr der wässrigen Lösung, bevorzugt 95 Gewichts-% und mehr, besonders bevorzugt 98 Gewichts-% der wässrigen Lösung verdampft werden. Eine vorteilhafte Weiterbildung dieses Verfahrens ist darauf gerichtet, dass mindestens einer der Reduktionsmittelvorläufer
a) Harnstoff und
b) Amoniumformiat
in mindestens einer der folgenden Komponenten:
A) dem Stoffgemisch und
B) der wässrigen Lösung umfasst ist.

Weiter ist es vorteilhaft, dass die Temperaturen in der Zugabeleitung 2 bei einer mittleren Temperatur zwischen 380°C und 450°C liegen. Bevorzugt liegt die Temperatur über eine Länge der Zugabeleitung 2 höchstens 25°C oberhalb oder unterhalb einer mittleren Temperatur, bevorzugt einer mittleren Temperatur von 380°C bis 450°C.

Gemäß einer weiteren vorteilhaften Ausgestaltung dieses Verfahrens wird eine Heizleistung bei der Beheizung eingesetzt, die sich um bis zu 500 W/s ändert. Bevorzugt wird eine Menge von 0,5 ml/s der wässrigen Lösung 45 in die Zugabeleitung 2 gefördert. Weiterhin ist es bevorzugt, dass die Zugabeleitung 2 einen durchströmbaren Querschnitt von höchstens 20 mm² aufweist. Bevorzugt wird die Zugabeleitung 2 auf eine zweite Temperatur geheizt, die größer als die kritische Temperatur ist, bei der eine vollständige Verdampfung der wässrigen Lösung 45 erfolgt, um so gegebenenfalls vorhandene Ablagerungen aufzulösen.

Gemäß einer weiteren vorteilhaften Ausgestaltung dieses Verfahrens wird vor Beginn der Verdampfung die Temperatur der Zugabeleitung 2 bestimmt und mit anderen bekannten Temperaturen abgeglichen. Hierbei kann es sich beispielsweise um andere im Automobil bekannte oder gemessene Temperaturen handeln, wie beispielsweise die über einen Außentemperaturmessfühler gemessene äußere Temperatur oder die Kühlwassertemperatur.

Gemäß einer weiteren vorteilhaften Ausgestaltung dieses Verfahrens erfolgt die Aufheizung der Zugabeleitung 2 über eine elektrische Widerstandsheizung, wobei vor Beginn der Aufheizung der Widerstand dieser Widerstandsheizung bestimmt wird und in Abhängigkeit von dem ermittelten Widerstand eine Aufheizung der Zugabeleitung erfolgt. Eine weitere vorteilhafte Weiterbildung dieses Verfahrens ist darauf gerichtet, dass die eingebrachte Heizleistung bei der Beheizung der Zugabeleitung 2 überwacht wird. Gemäß einer weiteren vorteilhaften Ausgestaltung dieses Verfahrens wir die Beheizung unterbrochen, wenn die Heizleistung über eine vorgebbare Zeitspanne unter einem von der zu verdampfenden Menge wässriger Lösung abhängigen Wert bleibt.

Die Vorrichtung 1 und das erfindungsgemäße Verfahren erlauben in vorteilhafter Weise die Bereitstellung eines Reduktionsmittels für die selektive katalytische Reduktion von Stickoxiden im Abgas einer Verbrennungskraftmaschine. Die bevorzugte Ausbildung der Verdampfereinheit 12 als Verdampferkammer 24 und des Hydrolysekatalysators 17 außerhalb des Abgassystems erlaubt in vorteilhafter Weise eine kleine Auslegung des Hydrolysekatalysators 17 und somit eine kompakte Bauweise.

### Bezugszeichenliste

- 1: Vorrichtung zum Bereitstellen eines gasförmigen Stoffgemisches
- 2: Zugabeleitung
- 3: Abgabeöffnung
- 4: Mittel zur Aufheizung der Zugabeleitung
- 5: Messfühler
- 6: Förderleitung
- 7: Mittel zum Temperieren
- 8: Peltier-Element
- 9: Kühlkörper
- 10: Elektrischer Anschluss
- 11: Verbindungseinheit
- 12: Verdampfereinheit
- 13: Abgas
- 14: Abgasleitung
- 15: Vorrichtung zur Aufbereitung des Abgases einer Verbrennungskraftmaschine
- 16: Reduktionsmittellösungsverdampfer
- 17: Hydrolysekatalysator
- 18: SCR-Katalysator
- 19: Fördermittel
- 20: Reservoir
- 21: Dosierleitung
- 22: Dosieröffnung
- 23: Vermischungsmittel
- 24: Verdampferkammer
- 25: Erste Öffnung
- 26: Zweite Öffnung
- 27: Mittel zur Aufheizung der Verdampferkammer
- 28: Struktur
- 29: Ummantelung der Verdampfereinheit
- 30: Heizleiteranschluss
- 31: Mittel zur Temperierung des Hydrolysekatalysators
- 32: Ummantelung des Hydrolysekatalysators
- 33: Verbindungsmittel
- 34: Leitblech
- 35: Reduktionsmittelstoffgemisch
- 36: Dritte Öffnung
- 37: Leitstruktur
- 38: Heizleiter
- 39: Erster Temperaturmessfühler
- 40: Verbindungselement
- 41: Erster Heizleiteranschluss
- 42: Zweiter Heizleiteranschluss
- 43: Zweiter Temperaturmessfühler
- 44: Zweites Verbindungselement
- 45: Wässrige Lösung
- 46: Zugabeeinheit
- 47: Dritter Temperaturmessfühler
- 48: Vierter Temperaturmessfühler
- 49: Temperiermittel
- 50: Zugabetemperiermittel
- 51: Steuereinheit
- 52: Wabenkörper
- 53: Vermischungsmittel
- 54: Hauptströmungsrichtung
- 55: Aussparung
- 56: Perforation
- 57: Länge
- 58: erster Abgasstrang
- 59: zweiter Abgasstrang
- 60: Mittel zur Strömungsleitung
- 61: Einmündung
- 62: Düse
- 63: Mittel zum Verbrennen von Kohlenwasserstoffen
- 64: Mittel zum Abscheiden von Tropfen
- 65: Leitung
- 66: Prallplatte
- 67: Umlenkung
- 68: Gehäuse
- 69: Stabförmiges Heizelement
- 70: elektrischer Anschluss
- 71: Verbindungsmittel
- 72: Thermische Isolierung
- 73: Wärmeschild
- 74: Luftspaltisolierung
- 75: Außengehäuse
- 76: Innengehäuse
- 77: Ventil
- 78: Steueranschluss
- 79: Mündungsbereich
- 80: Blende
- 81: Temperatursensor
- 82: Wabenkörper
- 83: glatte metallische Lage
- 84: gewellte metallische Lage
- 85: Mantelrohr
- 86: Kanal
- 87: ringförmiger Wabenkörper
- 88: Lage
- 89: glatter Bereich
- 90: gewellter Bereich
- 91: äußeres Mantelrohr
- 92: inneres Mantelrohr

## Patentansprüche

1. Verfahren zum Bereitstellen eines gasförmigen Stoffgemisches umfassend mindestens einen der folgenden Stoffe:
a) mindestens ein Reduktionsmittel und
b) mindestens einen Reduktionsmittelvorläufer,
wobei eine wässrige Lösung (45) mindestens eines Reduktionsmittelvorläufers in eine Verdampferkammer (24) einer Verdampfereinheit (12) gefördert wird, **dadurch gekennzeichnet, dass** die Verdampferkammer (24) so beheizt wird, dass die wässrige Lösung (45) vollständig zu dem gasförmigen Stoffgemisch verdampft, wobei die Verdampfereinheit (12) Mittel (64) zum Abscheiden von Tropfen aufweist, die innerhalb einer Zugabeleitung (2) oder in der Verdampferkammer (24) ausgebildet sind, wobei das Mittel (64) mit der Zugabeleitung (2) verbunden ist durch die Dampf tritt, wobei in dem Mittel (64) eine oder mehrere. Prallplatten (66) ausgebildet sind, die den Dampfstrom zu Umlenkungen (67) zwingen, wobei die eine oder mehrere Prallplatten (66) und/oder ein Gehäuse (68) des Mittels (64) beheizt sind, insbesondere so dass abgeschiedene Tropfen ebenfalls verdampft werden, wobei, die Verdampferkammer (24) auf eine mittlere Temperatur von 350 bis 45C°C aufgeheizt wird, von der an keinem Punkt der Verdampferkammer (24) um mehr als + 25°C oder-25°C abgewichen wird.

2. Verfahren nach Anspruch 1, wobei die Zugabeleitung (2) bereichsweise verengte Querschnitte, Vorsprünge, Umlenkungen oder ähnliches aufweist.

3. Verfahren nach Anspruch 1 oder 2, bei dem die wässrige Lösung (45) in Tropfenform in die Verdampferkammer (24) gefördert wird.

4. Verfahren nach einem der Ansprüche 1 bis 3, bei dem die Verdampferkammer (24) ein im wesentlichen abgeschlossenes Volumen umfasst, welches lediglich eine erste Öffnung (2 5) zum Anschluss einer Förderleitung (6) für die wässrige Lösung (45) und eine zweite Öffnung (26) zum Anschluss einer Zugabeleitung (2) zum Abführen des gasförmigen Stoffgemisches aufweist.

5. Verfahren nach einem der Ansprüche 1 bis 4, bei dem die Verdampferkammer (24) mit einer elektrischen Widerstandsheizung (2 7) aufgeheizt wird.

## Claims

1. Method for providing a gaseous substance mixture comprising at least one of the following substances:
a) at least one reducing agent and
b) at least one reducing agent precursor,
with an aqueous solution (45) of at least one reducing agent precursor being delivered into an evaporator chamber (24) of an evaporator unit (12), **characterized in that** the evaporator chamber (24) is heated in such a way that the aqueous solution (45) is completely evaporated to form the gaseous substance mixture, wherein the evaporator unit (12) has means (64) for depositing droplets, which means (64) are formed within a metering line (2) or in the evaporator chamber (24), wherein the means (64) is connected to the metering line (2) through which vapour passes, wherein formed in the means (64) are one or more impact plates (66) which force the vapour flow to undergo deflections (67), wherein the one or more impact plates (66) and/or a housing (68) of the means (64) are heated, in particular so that deposited droplets are likewise evaporated, wherein the evaporator chamber (24) is heated to a mean temperature of 350 to 450°C which is not deviated from at any point of the evaporator chamber (24) by more than +25°C or -25°C.

2. Method according to Claim 1, wherein the metering line (2) has, in regions, narrowed cross sections, projections, deflections or the like.

3. Method according to Claim 1 or 2, in which the aqueous solution (45) is delivered into the evaporator chamber (24) in droplet form.

4. Method according to one of Claims 1 to 3, in which the evaporator chamber (24) encompasses a substantially closed volume which has only a first opening (25) for connecting a delivery line (6) for the aqueous solution (45), and a second opening (26) for connecting a metering line (2) for discharging the gaseous substance mixture.

5. Method according to one of Claims 1 to 4, in which the evaporator chamber (24) is heated by means of an electrical resistance heater (27).

## Revendications

1. Procédé de préparation d'un mélange de substances gazeux, comprenant au moins l'une des substances suivante
a) au moins un agent réducteur et
b) au moins un précurseur d'agent réducteur,
dans lequel on transporte une solution (45) aqueuse d'au moins un précurseur d'agent réducteur dans une chambre (24) d'évaporateur d'une unité (12) à évaporateur, **caractérisé en ce que** l'on chauffe la chambre (24) de l'évaporateur de manière à évaporer la solution (45) aqueuse complètement en le mélange de substances gazeux, l'unité (12) à évaporateur ayant des moyens (64) de dépôt de gouttes qui se forment au sein d'un conduit (22) d'addition ou dans la chambre (24) de l'évaporateur, les moyens (64) étant reliés au conduit (2) d'addition par lequel entre de la vapeur, dans lequel, dans les moyens (64), sont constituées une ou plusieurs plaques (66) de rebondissement, qui obligent le courant de vapeur à des déviations (67), dans lequel la une ou les plusieurs plaques (66) de rebondissement et/ou une enveloppe (68) des moyens (64) sont chauffées, notamment de manière à ce que des gouttes déposées soient également évaporées, la chambre (24) de l'évaporateur étant portée à une température moyenne de 350 à 450°C, dont on ne s'écarte en aucun point de la chambre (24) de l'évaporateur de plus de +25°C ou -25°C.

2. Procédé suivant la revendication 1, dans lequel le conduit (2) d'addition a, par tronçon, des sections transversales rétrécies, des saillies, des déviations ou analogues.

3. Procédé suivant la revendication 1 ou 2, dans lequel on transporte la solution (45) aqueuse sous forme de gouttes dans la chambre (24) de l'évaporateur.

4. Procédé suivant l'une des revendications 1 à 3, dans lequel la chambre (24) de l'évaporateur comprend un volume sensiblement fermé, qui a seulement une première ouverture (25) de raccordement d'un conduit (6) de transport de la solution (45) aqueuse et une deuxième ouverture (26) de raccordement d'un conduit (2) d'addition pour l'évacuation du mélange de substances gazeux.

5. Procédé suivant l'une des revendications 1 à 4, dans lequel on chauffe la chambre (24) de l'évaporateur par un chauffage (27) à résistance électrique.
